# EUROPEAN PATENT SPECIFICATION

(11) **EP 4 142 403 B1**
(45) Date of publication and mention of the grant of the patent: **05.03.2025**
(21) Application number: 21813719.8
(22) Date of filing: 21.05.2021
(51) Int. Cl.: H04W 72/40, H04W 72/04, H04W 72/0453, H04W 76/11, H04W 76/15, H04W 76/27

(54) **WIRELESS COMMUNICATION METHOD, MEDIUM, AND SYSTEM**
VERFAHREN, MEDIUM UND SYSTEM ZUR DRAHTLOSEN KOMMUNIKATION
PROCÉDÉ DE COMMUNICATION SANS FIL, SUPPORT ET SYSTÈME

(30) Priority: 25.05.2020 CN 202010451595
(43) Date of publication of application: 01.03.2023
(73) Proprietor: Huawei Technologies Co., Ltd., Longgang District, Shenzhen, Guangdong 518129 (CN)
(72) Inventor: ZHANG, Mengchen, Shenzhen, Guangdong 518129 (CN); XU, Haibo, Shenzhen, Guangdong 518129 (CN); WANG, Jian, Shenzhen, Guangdong 518129 (CN)
(74) Representative: Pfenning, Meinig & Partner mbB
(86) International application number: PCT/CN2021/095099
(87) International publication number: WO 2021/238786

(56) References cited:
- WO-A1-2018/177109
- WO-A1-2019/023857
- WO-A1-2020/257048
- CN-A- 103 874 187
- CN-A- 110 880 961
- CN-A- 110 999 449
- CN-A- 111 327 408
- CN-A- 112 640 525
- US-A1- 2019 141 647
- US-A1- 2020 120 674
- US-B2- 9 408 212

## Description

### TECHNICAL FIELD

One or more embodiments of this application generally relate to the communication field, and specifically, to a wireless communication method for transmission user equipment, reception user equipment, and a network device, a medium, and a system. The method, the medium, and the system may be used to implement multi-carrier-based sidelink communication between the transmission user equipment and the reception user equipment.

### BACKGROUND

In a 5G new radio (new radio, NR) vehicle to everything (vehicle to everything, V2X) scenario, for V2X communication between transmission user equipment (transmission UE, Tx UE) and reception user equipment (reception UE, Rx UE), currently, there are two resource allocation manners: a resource allocation manner based on scheduling by a base station and a resource allocation manner based on autonomous selection by the Tx UE. In the resource allocation manner based on scheduling by a base station, the Tx UE requests a communication resource from the base station, and the base station allocates a dedicated resource to the Tx UE for transmitting control information and data information. In the resource allocation manner based on autonomous selection by the Tx UE, a base station configures a resource pool for the Tx UE by using a broadcast message or dedicated signaling, and the Tx UE autonomously selects a resource from the resource pool to send control information and data information.

In an existing NR-V2X technical solution, V2X communication between Tx UE and Rx UE supports only a single carrier. For example, in the resource allocation manner based on scheduling by a base station, after the Tx UE and the Rx UE complete a V2X communication connection, when the Tx UE has a data transmission requirement, the Tx UE reports, to the base station, a scheduling request (scheduling request, SR) and a buffer status report (buffer status report, BSR) indicating a size of to-be-transmitted data. The base station schedules, based on the SR and the BSR, a data transmission resource related to a single carrier for the Tx UE. However, because a data transmission capability of a single carrier is limited, communication quality of the Tx UE is limited when the Tx UE has a large data communication requirement.

WO 2019/023857 A1 discloses that a first user equipment transmitting a sidelink carrier aggregation configuration to a second user equipment; and the first user equipment communicating directly with the second user equipment on a plurality of sidelink carriers in accordance with the sidelink carrier aggregation configuration.

US 9 408 212 B2 discloses a method including establishing, at a first communication apparatus, a carrier aggregation configuration defining a set of one or more component carriers usable for device-to-device communication between the first communication apparatus and a second communication apparatus.

### SUMMARY

The present invention is set out in the appended set of claims. The following describes this application from a plurality of aspects. For implementations and beneficial effects of the following plurality of aspects, reference may be made to each other.

A first aspect of this application provides a wireless communication method for transmission user equipment (transmission UE, Tx UE). The method includes: determining multi-carrier configuration request information, to request a network device to configure multiple carriers for sidelink communication between the transmission user equipment and reception user equipment (reception UE, Rx UE); sending the multi-carrier configuration request information to the network device; and receiving, from the network device, first information indicating a multi-carrier configuration, where the first information includes information related to multiple carriers configured by the network device for the transmission user equipment.

In some embodiments, the first information includes information that the network device indicates, from the multiple carriers, one carrier to be used as a primary carrier.

In some embodiments, one carrier is selected from the multiple carriers to be used as a primary carrier.

In some embodiments, it is determined whether a sidelink connection used for sidelink communication can be established to the reception user equipment based on the primary carrier; and when it is determined that the sidelink connection to the reception user equipment cannot be established based on the primary carrier, at least one of the following pieces of information is sent to the network device: information about a failure in establishing the sidelink connection and information for requesting the network device to re-indicate a primary carrier.

In some embodiments, it is determined whether a sidelink connection used for sidelink communication can be established to the reception user equipment based on the primary carrier; and
when it is determined that the sidelink connection cannot be established to the reception user equipment based on the primary carrier, another carrier is selected from the multiple carriers as the primary carrier.

In some embodiments, that it is determined whether a sidelink connection used for sidelink communication can be established to the reception user equipment based on the primary carrier includes: determining whether information indicating that establishment of the sidelink connection is completed is received from the reception user equipment.

In some embodiments, after receiving the first information from the network device, information for requesting a resource required for establishment of the sidelink connection is sent to the network device, where the resource is related to the primary carrier.

In some embodiments, before sending the multi-carrier configuration request information to the network device, the information indicating that establishment of the sidelink connection is completed is received from the reception user equipment.

In some embodiments, the multi-carrier configuration request information includes information indicating a multi-carrier communication capability of at least one of the transmission user equipment and the reception user equipment.

In some embodiments, the information about the multi-carrier communication capability includes at least one of a quantity of supported multiple carriers and frequency bands of the supported multiple carriers.

In some embodiments, the first information includes information indicating an activated/deactivated state of each carrier or each secondary carrier in the multiple carriers.

In some embodiments, the sidelink communication is performed, based on the first information, on at least one carrier or at least one secondary carrier that is in the multiple carriers and that is indicated as being in an activated state.

In some embodiments, the method further includes: sending, to the reception user equipment, second information indicating the multi-carrier configuration, to notify the reception user equipment that the multiple carriers have been configured for the sidelink communication between the transmission user equipment and the reception user equipment, where the second information includes information indicating an activated/deactivated state of each secondary carrier in the multiple carriers.

In some embodiments, the multi-carrier configuration request information is included in a sidelinkUEinformationNR Message or a UEAssistanceInformation Message.

In some embodiments, the first information is included in an RRCReconfiguration Message, or the second information is included in an RRCReconfigurationSidelink Message.

A second aspect of this application provides a wireless communication method for a network device, including: receiving multi-carrier configuration request information from transmission user equipment (Tx UE), where the multi-carrier configuration request information is used for requesting the network device to configure multiple carriers for sidelink communication between the transmission user equipment and reception user equipment (Rx UE); configuring multiple carriers for the sidelink communication in response to the multi-carrier configuration request information; and sending, to the transmission user equipment, first information indicating a multi-carrier configuration, where the first information includes information related to the multiple carriers configured by the network device for the transmission user equipment.

In some embodiments, the first information includes information that the network device indicates, from the multiple carriers, one carrier to be used as a primary carrier.

In some embodiments, the multi-carrier configuration request information includes information indicating a multi-carrier communication capability of at least one of the transmission user equipment and the reception user equipment.

In some embodiments, the information about the multi-carrier communication capability includes at least one of a quantity of multiple carriers and frequency bands of multiple carriers that are supported by at least one of the transmission user equipment and the reception user equipment.

In some embodiments, the first information includes information indicating an activated/deactivated state of each carrier or each secondary carrier in the multiple carriers.

In some embodiments, the multi-carrier configuration request information is included in a sidelinkUEinformationNR Message or a UEAssistanceInformation Message.

In some embodiments, the first information is included in an RRCreconfiguration Message.

A third aspect of this application provides a wireless communication method for reception user equipment (Rx UE), including: receiving, from transmission user equipment (Tx UE), information for requesting to establish a sidelink connection; establishing the sidelink connection with the transmission user equipment in response to the information for requesting to establish a sidelink connection; receiving, from the transmission user equipment, second information indicating a multi-carrier configuration, where the second information includes information indicating an activated/deactivated state of each secondary carrier in multiple carriers; and in response to the second information, setting the reception user equipment to perform sidelink communication on at least one secondary carrier that is in an activated state and that is in the multiple carriers.

In some embodiments, information indicating that establishment of the sidelink connection is completed is sent to the transmission user equipment, where the information includes information indicating a multi-carrier communication capability of the reception user equipment.

In some embodiments, information indicating that establishment of the sidelink connection is completed is sent to the transmission user equipment; information for requesting a multi-carrier communication capability is received from the transmission user equipment; and information indicating the multi-carrier communication capability of the reception user equipment is sent to the transmission user equipment.

In some embodiments, the multi-carrier communication capability includes at least one of a quantity of multiple carriers and frequency bands of multiple carriers that are supported by the reception user equipment.

A fourth aspect of this application provides a machine-readable medium, where the medium stores instructions, and when the instructions are run on a machine, the machine is enabled to perform the methods in the first to the third aspects of this application.

A fifth aspect of this application provides a system, including a processor and a memory. The memory stores instructions, and when the instructions are run by the processor, the system is enabled to perform the methods in the first to the third aspects of this application.

### BRIEF DESCRIPTION OF DRAWINGS

FIG. 1A is a schematic diagram of an application scenario according to an embodiment of this application;
FIG. 1B is a schematic diagram of another application scenario according to an embodiment of this application;
FIG. 2 is a schematic flowchart of a wireless communication method 200 according to an embodiment of this application;
FIG. 3 is a schematic flowchart of a wireless communication method 300 according to Embodiment 1 of this application;
FIG. 4 is a schematic flowchart of a wireless communication method 400 according to Embodiment 1 of this application;
FIG. 5A and FIG. 5B are a schematic flowchart of a wireless communication method 500 for Tx UE 110 according to Embodiment 1 of this application;
FIG. 6 is a schematic flowchart of a wireless communication method 600 for a network device 120 according to Embodiment 1 of this application;
FIG. 7 is a schematic flowchart of a wireless communication method 700 for Rx UE 130 according to Embodiment 1 of this application;
FIG. 8A and FIG. 8B are a schematic flowchart of a wireless communication method 800 according to Embodiment 2 of this application;
FIG. 9 is a schematic flowchart of a wireless communication method 900 according to Embodiment 2 of this application;
FIG. 10A and FIG. 10B are a schematic flowchart of a wireless communication method 1000 for Tx UE 110 according to Embodiment 2 of this application;
FIG. 11 is a schematic flowchart of a wireless communication method 1100 for a network device 120 according to Embodiment 2 of this application;
FIG. 12 is a schematic flowchart of a wireless communication method 1200 according to Embodiment 3 of this application;
FIG. 13A and FIG. 13B are a schematic flowchart of a wireless communication method 1300 according to Embodiment 3 of this application;
FIG. 14A and FIG. 14B are a schematic flowchart of a wireless communication method 1400 for Tx UE 110 according to Embodiment 3 of this application;
FIG. 15 is a schematic flowchart of a wireless communication method 1500 for a network device 120 according to Embodiment 3 of this application; and
FIG. 16 is a schematic diagram of a structure of a device 1600 according to an embodiment of this application.

### DESCRIPTION OF EMBODIMENTS

It should be understood that although terms such as "first" and "second" may be used herein to describe various features, these features should not be limited by these terms. These terms are merely used for distinction, and shall not be understood as an indication or implication of relative importance. For example, without departing from the scope of the example embodiments, a first feature may be referred to as a second feature, and similarly the second feature may be referred to as the first feature.

Unless otherwise stated, terms "contain", "have", and "include" are synonymous. A phrase "A/B" indicates "A or B". The phrase "A and/or B" means "(A), (B), or (A and B)".

As used herein, the term "module" may refer to being a part thereof, or include a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

To make the objectives, technical solutions, and advantages of this application clearer, the following further describes the implementations of this application in detail with reference to the accompanying drawings.

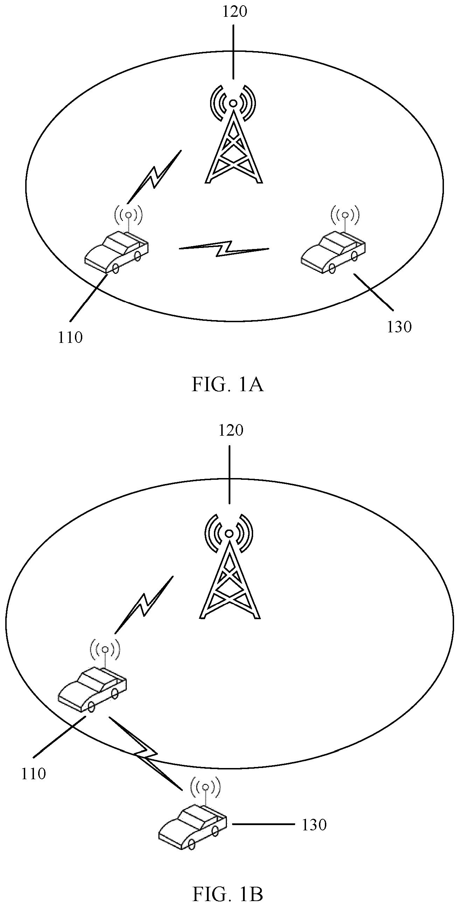

FIG. 1A and FIG. 1B show two application scenarios according to an embodiment of this application. Tx UE 110, a network device 120, and Rx UE 130 are involved. When the Tx UE 110 needs to communicate with the adjacent Rx UE 130, the Tx UE 110 may first request, from the network device 120, a resource required for communication. Then, the Tx UE 110 sends control information and data information to the Rx UE 130 based on a resource allocated by the network device. Different from that in FIG. 1B, in FIG. 1A, both the Tx UE 110 and the Rx UE 130 are located within coverage of the network device 120. In FIG. 1B, the Tx UE 110 is located within coverage of the network device 120; however, the Rx UE 130 is located outside coverage of the network device 120. It should be noted that although in FIG. 1A and FIG. 1B, the Tx UE 110 is shown to communicate with only one Rx UE 130, the Tx UE 110 may also communicate with a plurality of different pieces of Rx UE 130. Embodiments of this application is applicable to communication between the Tx UE 110 and each piece of Rx UE 130.
(1) The Tx UE 110 and the Rx UE 130 in FIG. 1A and FIG. 1B are user equipment, alternatively referred to as terminals or terminal devices, and are devices that provide voice and/or data connectivity for a user. Common terminal devices include, for example, a vehicle-mounted device, a mobile phone, a tablet computer, a notebook computer, a palmtop computer, a mobile internet device (mobile internet device, MID), a wearable device (for example, a smart watch, a smart band, or a pedometer), a personal digital assistant, or a portable media player, a navigation device, a video game device, a set-top box, a virtual reality and/or augmented reality device, an internet of things device, an industrial control device, a streaming media client device, an e-book, a reading device, a POS machine, and another device.
(2) The network device 120, alternatively referred to as a radio access network (Radio Access Network, RAN) device, is a device that communicates with user equipment through a radio access network. The network device 120 includes network devices in various communication standards, for example, includes but is not limited to a base station, an evolved node B (evolved Node B, eNB), a next generation node (Next Generation Node B, gNB), a radio network controller (radio network controller, RNC), a Node B (Node B, NB), a network device controller (Base Station Controller, BSC), a network device transceiver station (Base Transceiver Station, BTS), a home network device (for example, a Home evolved NodeB, or a Home Node B, HNB), a baseband unit (BaseBand Unit, BBU), and the like. The network device includes network devices of various frequency standards, for example, includes but is not limited to a low-frequency network device and a high-frequency network device.
(3) Communication between the Tx UE 110 and the Rx UE 130 may include sidelink communication (sidelink communication). In embodiments of this application, the sidelink communication may include proximity-based service (proximity-based services, ProSe) direct communication (defined in 3GPP TS 23.303), V2X communication (defined in 3GPP TS 23.285), and another type of wireless communication directly performed between two or more pieces of neighboring user equipment.
(4) In sidelink communication, a communication link between the Tx UE 110 and the Rx UE 130 is referred to as a sidelink (sidelink), and a communication interface between the Tx UE 110 and the Rx UE 130 is referred to as a PC5 interface.
(5) Communication between the Tx UE 110 and the network device 120 may be based on, but is not limited to, the 3rd generation (3rd-Generation, 3G) mobile communication system, the 4th generation (4th-Generation, 4G) mobile communication system, the 5th generation (5th generation, 5G) system, a new radio (new radio, NR) system, or a communication system having a same architecture as the 5G system, and another subsequent mobile communication system.

In a current technology, in 5G NR, sidelink communication between the Tx UE 110 and the Rx UE 130 supports only a single carrier, and the resource that is configured by the network device 120 for the Tx UE 110 and that is used for sidelink communication also includes only a single-carrier resource. In this case, if the Tx UE 110 has a large data communication requirement, communication quality of the Tx UE 110 is to be limited. In addition, in 4G LTE V2X, although sidelink communication between the Tx UE 110 and the Rx UE 130 already supports multiple carriers, the multiple carriers are only for a broadcast scenario. In other words, the Tx UE 110 sends broadcast data on the multiple carriers configured by the network device 120, and interested Rx UE 130 is to perform monitoring.

In a long term evolution (long term evolution, LTE) system, to meet requirements on an increased single-user peak rate and a higher system capacity, a carrier aggregation (carrier aggregation, CA) technology is introduced. In the CA technology, a plurality of LTE component carriers (component carrier, CC) may be aggregated, to effectively improve uplink and downlink transmission rates. A component carrier accessed by UE is referred to as a primary carrier, and other component carriers are referred to as secondary carriers. An uplink carrier and a corresponding downlink carrier form a cell (Cell). Correspondingly, the primary carrier is a primary cell (Primary Cell, PCell), and a secondary carrier is a secondary cell (Secondary Cell, SCell).

In this embodiment of this application, the Tx UE 110 may request the network device 120 to configure multiple carriers for sidelink communication between the Tx UE 110 and the Rx UE 130; the network device 120 may configure multiple carriers for the Tx UE 110 based on the request from the Tx UE 110; and the Tx UE 110 and the Rx UE 130 may be set based on information about the multiple carriers configured by the network device 120, to perform sidelink communication by using the multiple carriers. In this way, for the Tx UE 110, resources used for sidelink communication increase, and communication quality can be ensured even if there is a large data communication requirement.

The following uses specific embodiments to describe in detail the technical solutions of this application and how to resolve the foregoing technical problem in the technical solutions of this application. The following several specific embodiments may be mutually combined, and same or similar concepts or processes are not repeatedly described in some embodiments.

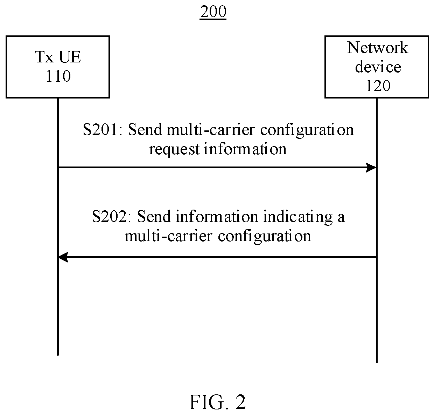

FIG. 2 is a schematic flowchart of a wireless communication method 200 according to an embodiment of this application. As shown in FIG. 2, the wireless communication method 200 may include the following steps.

S201: Tx UE 110 sends multi-carrier configuration request information to a network device 120.

In an example, for a structure of the multi-carrier configuration request information, refer to related descriptions in the following Embodiments 1 to 3. It may be understood that the multiple carriers requested for configuration are used for sidelink communication between the Tx UE 110 and Rx UE 130.

S202: The network device 120 sends, to the Tx UE 110, information indicating a multi-carrier configuration.

In an example, the information that indicates the multi-carrier configuration and that is sent by the network device 120 to the Tx UE 110 includes information related to multiple carriers configured by the network device for the Tx UE 110.

In an example, for a structure of the information indicating the multi-carrier configuration, refer to related descriptions in the following Embodiments 1 to 3.

### Embodiment 1

In this embodiment, before establishing a sidelink connection to Rx UE 130, Tx UE 110 requests a network device 120 to configure multiple carriers. The network device 120 configures, based on the request from the Tx UE 110, multiple carriers for sidelink communication between the Tx UE 110 and the Rx UE 130, and indicates one of the multiple carriers to be used as a primary carrier for establishing the sidelink connection between the Tx UE 110 and the Rx UE 130.

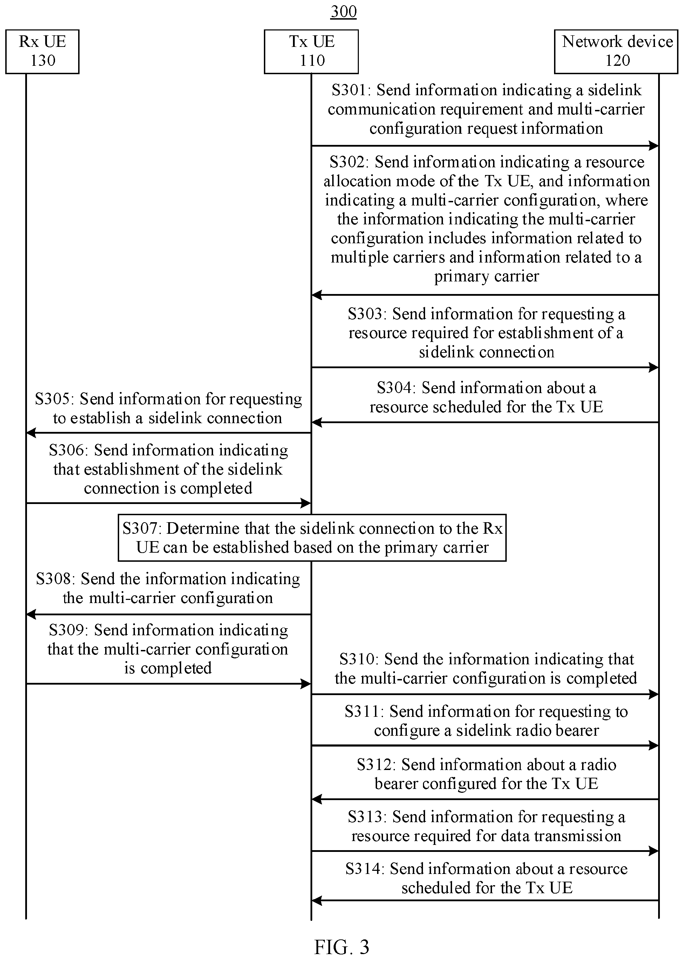

FIG. 3 is a schematic flowchart of a wireless communication method 300 according to Embodiment 1 of this application. In the method 300, the Tx UE 110 can establish a sidelink connection to Rx UE 130 based on a primary carrier.

It should be noted that although steps of the method are presented in a particular order in this embodiment of this application, an order of the steps may be changed in different embodiments. As shown in FIG. 3, the wireless communication method 300 may include the following steps.

S301: The Tx UE 110 sends a first message to a network device 120, where the first message includes information indicating a sidelink communication requirement and multi-carrier configuration request information. It may be understood that the first message may be determined by the Tx UE 110, or may be determined by the Rx UE 130, and then is sent to the Tx UE 110. A specific manner of determining the first message is not limited in this embodiment of this application.

In an example, the first message may include any one of a SidelinkUEInformation Message and a SidelinkUEInformationNR Message that are defined in 3GPP (3rd Generation Partnership Project, 3rd generation partnership project) TS 36.331, and a SidelinkUEInformationEUTRA Message and a SidelinkUEInformationNR Message (collectively referred to as a SidelinkUEInformation type message below) that are defined in TS 38.331. The SidelinkUEInformation type message is used by user equipment to indicate sidelink-related information to a network device (for example, a base station). In the SidelinkUEInformation type message, information indicating a sidelink communication requirement may include information indicating a frequency that the user equipment has interest in and that is used to transmit and receive sidelink communication, information indicating a destination list, and the like.

The Tx UE 110 may request, by using the SidelinkUEInformation type message, the network device 120 to configure multiple carriers in the following several forms.
(1) In the SidelinkUEInformation type message, the Tx UE 110 uses one bit to indicate whether the Tx UE 110 requests the network device 120 to configure multiple carriers. When a value of the bit is "1", it indicates that the Tx UE 110 requests the network device 120 to configure multiple carriers, that is, the value "1" represents the foregoing multi-carrier configuration request information; or when a value of the bit is 0, it indicates that the Tx UE 110 does not request the network device 120 to configure multiple carriers. Alternatively, when a value of the bit is "0", it indicates that the Tx UE 110 requests the network device 120 to configure multiple carriers, that is, the value "0" represents the foregoing multi-carrier configuration request information; or when a value of the bit is 1, it indicates that the Tx UE 110 does not request the network device 120 to configure multiple carriers.
(2) In the SidelinkUEInformation type message, the Tx UE 110 uses one bit to indicate whether the Tx UE 110 requests the network device 120 to configure a single carrier or multiple carriers. When a value of the bit is "1", it indicates that the Tx UE 110 requests the network device 120 to configure multiple carriers, that is, the value "1" represents the foregoing multi-carrier configuration request information; or when a value of the bit is 0, it indicates that the Tx UE 110 requests the network device 120 to configure a single carrier. Alternatively, when a value of the bit is "0", it indicates that the Tx UE 110 requests the network device 120 to configure multiple carriers, that is, the value "0" represents the foregoing multi-carrier configuration request information; or when a value of the bit is 1, it indicates that the Tx UE 110 requests the network device 120 to configure a single carrier.
(3) When the Tx UE 110 adds, to the SidelinkUEInformation type message, the multi-carrier configuration request information, it indicates that the Tx UE 110 requests the network device 120 to configure multiple carriers; or when the Tx UE 110 does not add, to the SidelinkUEInformation type message, the multi-carrier configuration request information, it indicates that the Tx UE 110 does not request the network device 120 to configure multiple carriers. In this case, the multi-carrier configuration request information may include any content, but is not limited to, for example, one bit whose value is "1" or one bit whose value is "0".
(4) When the Tx UE 110 adds a specific bit to the SidelinkUEInformation type message, it indicates that the Tx UE 110 requests the network device 120 to configure multiple carriers or a single carrier. Specifically, when a value of the specific bit is "1", it indicates that the Tx UE 110 requests the network device 120 to configure multiple carriers, that is, the value "1" represents the foregoing multi-carrier configuration request information; or when a value of the specific bit is 0, it indicates that the Tx UE 110 requests the network device 120 to configure a single carrier. Alternatively, when a value of the specific bit is "0", it indicates that the Tx UE 110 requests the network device 120 to configure multiple carriers, that is, the value "0" represents the foregoing multi-carrier configuration request information; or when a value of the specific bit is 1, it indicates that the Tx UE 110 requests the network device 120 to configure a single carrier. When the Tx UE 110 does not add the specific bit to the SidelinkUEInformation type message, it indicates that the Tx UE 110 does not request the network device 120 to configure multiple carriers and a single carrier.

In another example, the Tx UE 110 may send, in two different messages, the information indicating the sidelink communication requirement and the multi-carrier configuration request information. In this case, a message used to send the information indicating the sidelink communication requirement may include the SidelinkUEInformation type message, and a message used to send the multi-carrier configuration request information may include a UEAssistanceInformation Message defined in 3GPP TS 36.331 or 38.331, or a new message that has not been defined in 3GPP TS. The UEAssistanceInformation Message is used by user equipment to indicate auxiliary information of the user equipment to a network device (for example, a base station). The UEAssistanceInformation message may include information indicating a preference of the user equipment for a maximum physical downlink shared channel (Physical Downlink Shared Channel, PDSCH) bandwidth configuration, information indicating an excessive quantity of repetitions on an MTC physical downlink control channel (Machine-Type Communication (MTC) Physical Downlink Control Channel, MPDCCH), information indicating a service feature of an uplink logical channel, and the like.

For a form in which the Tx UE 110 requests, by using the UEAssistanceInformation Message or a newly defined message, the network device 120 to configure multiple carriers, refer to the foregoing descriptions of the SidelinkUEInformation type message. Details are not described herein again.

It should be noted that the Tx UE 110 may not send the multi-carrier configuration request information to the network device 120, but the network device 120 determines whether multiple carriers need to be configured for the Tx UE 110.

S302: The network device 120 sends a second message to the Tx UE 110, where the second message includes information indicating that a resource allocation mode of the Tx UE 110 is a resource allocation mode scheduled by a base station, and information indicating a multi-carrier configuration, where the information indicating the multi-carrier configuration includes information related to multiple carriers configured by the network device 120 for the Tx UE 110 and information related to a primary carrier (or referred to as a primary cell).

In an example, the second message includes an RRCConnectionReconfiguration Message defined in 3GPP TS 36.331 or an RRCReconfiguration Message defined in 3GPP TS 38.331. In the RRCConnectionReconfiguration Message or the RRCReconfiguration Message, content of an IE (information element, information element) "SL-V2X-ConfigDedicated" may indicate that a resource allocation mode of the Tx UE 110 is a resource allocation mode based on scheduling by a base station or a resource allocation manner based on autonomous selection. Alternatively, the second message may include a new message that has not been defined in 3GPP TS.

In an example, the information indicating the multi-carrier configuration may include identifiers of the multiple carriers configured by the network device 120 for the Tx UE 110, for example, but not limited to, a carrier ID (Identifier, identifier), a cell index, and a number. In addition, for each carrier, the information indicating the multi-carrier configuration may further include a parameter configuration of the carrier, for example, a frequency band, a frequency, bandwidth, and a subcarrier spacing.

The information indicating the multi-carrier configuration may further additionally include: information that the network device 120 indicates, from the multiple carriers, one carrier as the primary carrier, or information directly indicating the primary carrier. The Tx UE 110 may distinguish between the primary carrier and a secondary carrier (or a secondary cell) in the foregoing plurality of carriers based on these pieces of information related to the primary carrier, where the primary carrier is to be used for establishing a sidelink connection between the Tx UE 110 and the Rx UE 130, and the secondary carrier is to be used for providing an additional radio resource for sidelink communication between the Tx UE 110 and the Rx UE 130.

For example, when the information indicating the multi-carrier configuration includes IDs of the multiple carriers, the network device 120 may specify the second ID in the IDs of the multiple carriers as an ID of the primary carrier. In this case, the information that the network device 120 indicates, from the multiple carriers, one carrier as the primary carrier may be "2". For another example, when the information indicating the multi-carrier configuration includes cell indexes of the multiple carriers, the network device 120 may additionally and directly indicate a cell index of the primary carrier.

It should be noted that the information indicating the multi-carrier configuration may not additionally include: information indicating, by the network device 120 from the multiple carriers, one carrier as the primary carrier, or information directly indicating the primary carrier. In this case, in an example, the network device 120 may directly indicate information about the primary carrier by using an identifier of the carrier. For example, the network device 120 may configure a secondary cell index value of the primary carrier as SCellIndex=0, and configure a secondary cell index value of a secondary carrier as SCellIndex=1, SCellIndex=2, or the like. In another example, between the network device 120 and the Tx UE 110, an indication rule for a primary carrier may be considered by default. For example, between the network device 120 and the Tx UE 110, the first ID in the IDs of the foregoing plurality of carriers may be considered as an ID of the primary carrier by default.

In another example, the information indicating the multi-carrier configuration may further additionally include an identifier of the Rx UE 130, and the identifier of the Rx UE 130 is used to indicate that the multiple carriers configured by the network device 120 are used for sidelink communication between the Tx UE 110 and a specified piece of Rx UE 130. The identifier of the Rx UE 130 may include, but is not limited to, a destination layer-2 identifier (destination layer-2 ID) of the Rx UE 130, an index of the Rx UE 130 that is in a plurality of pieces of Rx UE communicating with the Tx UE 110, and the like.

In another example, the information indicating the multi-carrier configuration may further additionally include information indicating initial states of the foregoing plurality of carriers, and the information indicating the initial states of the foregoing plurality of carriers may include information indicating an activated or a deactivated state of each carrier in the multiple carriers. The primary carrier in the multiple carriers is to be used for establishing the sidelink communication connection between the Tx UE 110 and the Rx UE 130. Therefore, the network device 120 may configure the primary carrier to be in an activated state. The network device 120 may configure all secondary carriers in the multiple carriers to be in an activated state. In this way, when the Tx UE 110 has a data transmission requirement, a step of activating the secondary carriers may be omitted, so that the Tx UE 110 obtains a transmission resource more quickly. Alternatively, the network device 120 may configure all secondary carriers to be in a deactivated state. In this way, a quantity of carriers monitored by the Rx UE 130 can be reduced, and power consumption of the Rx UE 130 can be reduced. Alternatively, the network device 120 may configure some secondary carriers to be in an activated state and some secondary carriers to be in a deactivated state. In this way, a step of activating some secondary carriers can be omitted, and a quantity of carriers monitored by the Rx UE 130 can also be reduced.

It should be noted that, when the Tx UE 110 and the network device 120 consider by default that the primary carrier is in an activated state, the information indicating the initial states of the multiple carriers may not include information indicating an activated or a deactivated state of the primary carrier, but include information indicating an activated or a deactivated state of each secondary carrier.

The network device 120 may indicate the initial states of the multiple carriers in the following several manners.
(1) An activated state or a deactivated state of each carrier or each secondary carrier is indicated by using one bit. For example, when a value of the bit is "1", it indicates that the carrier is configured to be in an activated state; or when a value of the bit is "0", it indicates that the carrier is configured to be in a deactivated state. Alternatively, when a value of the bit is "0", it indicates that the carrier is configured to be in an activated state, or when a value of the bit is "1", it indicates that the carrier is configured to be in a deactivated state. In addition, each bit indicating the activated or deactivated state of each carrier or each secondary carrier may be located before or after an identifier of each carrier or each secondary carrier. Alternatively, bits indicating the activated or deactivated state of all carriers or all secondary carriers may be located before or after identifiers of the multiple carriers, and an arrangement sequence of the bits may correspond to an arrangement sequence of the identifiers of the multiple carriers.

In another example, a character string "activated" may be used to indicate that a carrier is configured to be in an activated state, and a character string "deactivated" is used to indicate that a carrier is configured to be in a deactivated state. In addition, each character string indicating the activated or deactivated state of each carrier or each secondary carrier may be located before or after the identifier of each carrier or each secondary carrier. Alternatively, character strings indicating the activated or deactivated state of all carriers or all secondary carriers may be located before or after the identifiers of the multiple carriers, and an arrangement order of the character strings may correspond to an arrangement order of the identifiers of the multiple carriers.

In another example, only an identifier of a carrier configured to be in an activated state may be indicated, or only an identifier of a carrier configured to be in a deactivated state may be indicated.

(2) When the multiple carriers are all configured to be in an activated state, in addition to the manner in (1), in an example, one bit may be used to indicate that the multiple carriers are all configured to be in an activated state. For example, when a value of the bit is "1", it indicates that the multiple carriers are all configured to be in an activated state. Alternatively, when a value of the bit is "0", it indicates that the multiple carriers are all configured to be in an activated state.

In another example, one character string "activated" may alternatively be used to indicate that the multiple carriers are all configured to be in an activated state.

(3) When the multiple carriers are all configured to be in a deactivated state, in addition to the manner in (1), in an example, one bit may be used to indicate that the multiple carriers are all configured to be in a deactivated state. For example, when a value of the bit is "0", it indicates that the multiple carriers are all configured to be in a deactivated state. Alternatively, when a value of the bit is "1", it indicates that the multiple carriers are all configured to be in a deactivated state.

In another example, one character string "deactivated" may alternatively be used to indicate that the multiple carriers are all configured to be in an activated state.

It should be noted that the network device 120 may alternatively separately send the information indicating that the resource allocation mode of the Tx UE 110 is the resource allocation mode scheduled by a base station, and the information indicating the multi-carrier configuration. For example, the network device 120 may send the two types of information by using two RRCReconfiguration messages.

It should be noted that when the Tx UE 110 does not send the multi-carrier configuration request information to the network device 120, the network device 120 may determine whether multiple carriers need to be configured for the Tx UE 110. In an example, the network device 120 may determine, based on historical resource usage of the Tx UE 110, a BSR reported by the Tx UE 110, a current idle resource, and the like, whether multiple carriers need to be configured for the Tx UE 110.

S303: The Tx UE 110 sends, to the network device 120, information for requesting a resource required for establishment of a sidelink connection.

In an example, the information for requesting the resource required for establishment of the sidelink connection may include an SR (scheduling request, scheduling request) and a BSR (buffer status report, buffer status report). The SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

It should be noted that the information for requesting the resource required for establishment of the sidelink connection may further include information related to the primary carrier, for example, but not limited to, an identifier of the primary carrier. The information related to the primary carrier is used to indicate, to the network device 120, that the requested resource is related to the primary carrier. In another example, the resource required for requesting establishment of the sidelink connection between the Tx UE 110 and the network device 120 may be related to the primary carrier by default. In this case, the information for requesting the resource required for establishment of the sidelink connection may not include the information related to the primary carrier.

In addition, the Tx UE 110 may perform setting based on the information that is received from the network device 120 and that indicates the multi-carrier configuration, to perform sidelink communication on at least one carrier (including the primary carrier) that is configured to be in an activated state and that is in the multiple carriers. For example, the Tx UE 110 may add, based on a parameter configuration of each carrier in the multiple carriers, each carrier corresponding to an identifier of each carrier.

S304: The network device 120 sends, to the Tx UE 110, information indicating a resource scheduled by the network device 120 for the Tx UE 110, where the resource is related to the primary carrier and is to be used for establishing the sidelink connection between the Tx UE 110 and the Rx UE 130. The network device 120 may schedule the resource based on the BSR reported by the Tx UE 110.

In an example, the network device 120 may send, to the Tx UE 110 by using a PDCCH, the information indicating the resource scheduled by the network device 120 for the Tx UE 110.

S305: The Tx UE 110 sends, to the Rx UE 130 based on the resource that is related to the primary carrier and that is allocated by the network device 120, information for requesting to establish a sidelink connection.

S306: The Rx UE 130 sends, to the Tx UE 110, information indicating that establishment of the sidelink connection is completed.

S307: The Tx UE 110 determines that the sidelink connection to the Rx UE 130 can be established based on the primary carrier.

In an example, if the Tx UE 110 determines that the information indicating that establishment of the sidelink connection is completed is received from the Rx UE 130 within a threshold time period after the information for requesting to establish a sidelink connection is sent to the Rx UE 130, the Tx UE 110 determines that the sidelink connection to the Rx UE 130 can be established based on the primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

When the Tx UE 110 determines that the sidelink connection to the Rx UE 130 can be established based on the primary carrier, the Tx UE 110 does not need to request the network device 120 to re-indicate a primary carrier.

S308: The Tx UE 110 sends a third message to the Rx UE 130, where the third message includes the information indicating the multi-carrier configuration.

In an example, the third message may include, but is not limited to, an RRCReconfigurationSidelink Message that is on a PC5 interface and that is defined in 3GPP TS 38.331, or another new message that has not been defined in 3GPP TS.

In an example, the information that indicates the multi-carrier configuration and that is sent by the Tx UE 110 to the Rx UE 130 may include an identifier of at least one secondary carrier in the multiple carriers configured by the network device 120 for the Tx UE 110, for example, but not limited to, a carrier ID and a cell index. In addition, for each secondary carrier, the information that indicates the multi-carrier configuration and that is sent by the Tx UE 110 to the Rx UE 130 may further include a parameter configuration of the secondary carrier, for example, a frequency band, a frequency, bandwidth, and a subcarrier spacing.

In another example, the information that indicates the multi-carrier configuration and that is sent by the Tx UE 110 to the Rx UE 130 may further additionally include information indicating an initial state of each secondary carrier, and the information indicating the initial state of each secondary carrier may include information indicating an activated or a deactivated state of each secondary carrier. For a manner in which the Tx UE 110 indicates the initial state of each secondary carrier, refer to the related descriptions in S302. Details are not described herein again.

S309: The Rx UE 130 sends a fourth message to the Tx UE 110, where the fourth message includes information indicating that the multi-carrier configuration is completed, to indicate, to the Tx UE 110, that the Rx UE 130 has completed the multi-carrier configuration.

In an example, the fourth message may include, but is not limited to, an RRCReconfigurationCompleteSidelink Message that is on a PC5 interface and that is defined in 3GPP TS 38.331, or another new message that has not been defined in 3GPP TS.

Before the Rx UE 130 sends, to the Tx UE 110, the information indicating that the multi-carrier configuration is completed, the Rx UE 130 may perform setting based on the information that is received from the Tx UE 110 and that indicates the multi-carrier configuration, to perform sidelink communication on at least one secondary carrier that is configured to be in an activated state. For example, the Rx UE 130 may add, based on a parameter configuration of each secondary carrier in the at least one secondary carrier that is configured to be in an activated state, each secondary carrier corresponding to an identifier of each secondary carrier.

S310: The Tx UE 110 sends a fifth message to the network device 120, where the fifth message includes the information indicating that the multi-carrier configuration is completed, to indicate, to the network device 120, that the Tx UE 110 and the Rx UE 130 have completed the multi-carrier configuration.

In an example, the fifth message may include an RRCConnectionReconfigurationComplete Message defined in 3GPP TS 36.331 or an RRCReconfigurationComplete Message defined in 3GPP TS 38.331. Alternatively, the fifth message may include a new message that has not been defined in 3GPP TS.

S311: When the Tx UE 110 has data to transmit to the Rx UE 130, the Tx UE 110 sends a sixth message to the network device 120, where the sixth message includes information for requesting to establish a sidelink radio bearer.

In an example, the sixth message may include the SidelinkUEInformation type message or another new message that has not been defined in 3GPP TS.

S312: The network device 120 sends a seventh message to the Tx UE 110, where the seventh message includes information indicating a radio bearer configured by the network device 120 for the Tx UE 110.

In an example, the seventh message may include an RRCConnectionReconfiguration Message defined in 3GPP TS 36.331 or an RRCReconfiguration Message defined in 3GPP TS 38.331. Alternatively, the seventh message may include a new message that has not been defined in 3GPP TS.

S313: The Tx UE 110 sends, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S314: The network device 120 sends, to the Tx UE 110, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110.

In an example, the network device 120 may send, to the Tx UE 110 by using a PDCCH, the information indicating the resource scheduled by the network device 120 for the Tx UE 110.

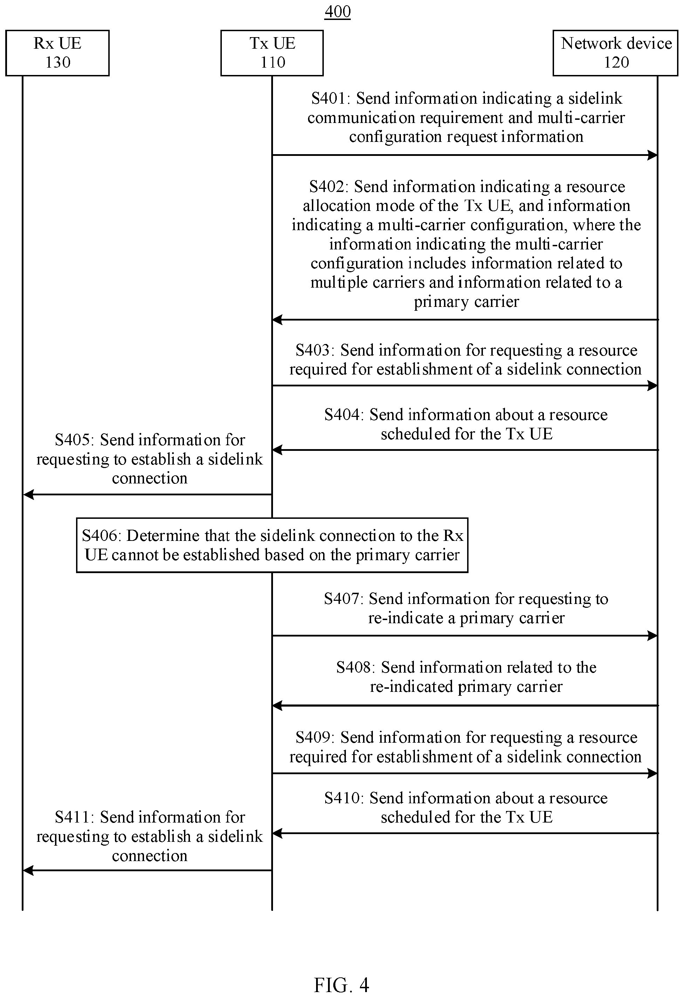

FIG. 4 is a schematic flowchart of a wireless communication method 400 according to Embodiment 1 of this application. In the method 400, Tx UE 110 cannot establish a sidelink connection to Rx UE 130 based on a primary carrier indicated by a network device 120, and the Tx UE 110 requests the network device 120 to re-indicate a primary carrier.

It should be noted that although steps of the method are presented in a particular order in this embodiment of this application, an order of the steps may be changed in different embodiments. As shown in FIG. 4, the wireless communication method 400 may include the following steps.

S401: The Tx UE 110 sends a first message to the network device 120, where the first message includes information indicating a sidelink communication requirement and multi-carrier configuration request information. The step is the same as S301 in FIG. 3. For details, refer to the descriptions of S301. Details are not described herein again.

S402: The network device 120 sends a second message to the Tx UE 110, where the second message includes information indicating that a resource allocation mode of the Tx UE 110 is a resource allocation mode scheduled by a base station, and information indicating a multi-carrier configuration, where the information indicating the multi-carrier configuration includes information related to multiple carriers configured by the network device 120 for the Tx UE 110 and information related to a primary carrier. The step is the same as S302 in FIG. 3. For details, refer to the descriptions of S302. Details are not described herein again.

S403: The Tx UE 110 sends, to the network device 120, information for requesting a resource required for establishment of a sidelink connection. The step is the same as S303 in FIG. 3. For details, refer to the descriptions of S303. Details are not described herein again.

S404: The network device 120 sends, to the Tx UE 110, information indicating a resource scheduled by the network device 120 for the Tx UE 110, where the resource is related to the primary carrier and is to be used for establishing the sidelink connection between the Tx UE 110 and the Rx UE 130. The step is the same as S304 in FIG. 3. For details, refer to the descriptions of S304. Details are not described herein again.

S405: The Tx UE 110 sends, to the Rx UE 130 based on the resource that is related to the primary carrier and that is allocated by the network device 120, information for requesting to establish a sidelink connection.

S406: The Tx UE 110 determines that the sidelink connection to the Rx UE 130 cannot be established based on the primary carrier.

In an example, if the Tx UE 110 determines that the information indicating that establishment of the sidelink connection is completed is not received from the Rx UE 130 within a threshold time period after the information for requesting to establish a sidelink connection is sent to the Rx UE 130, the Tx UE **110** determines that the sidelink connection to the Rx UE 130 cannot be established based on the primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

S407: The Tx UE 110 sends an eighth message to the network device 120, where the eighth message includes information for requesting to re-indicate a primary carrier.

In an example, the eighth message may include, but is not limited to, a SidelinkUEInformation type message, a UEAssistanceInformation message, or another new message that has not been defined in 3GPP TS.

In an example, in the eighth message, the Tx UE 110 may use one bit to indicate that the Tx UE 110 requests the network device 120 to re-indicate a primary carrier. A value of the bit may be "1" or "0". Alternatively, a non-numeric character string is used to indicate that the Tx UE 110 requests the network device 120 to re-indicate a primary carrier. For example, the non-numeric character string is, but is not limited to, an enumerated type value Enumerated {true}.

It should be noted that, in the eighth message, the Tx UE 110 may not send, to the network device 120, the information for requesting to re-indicate a primary carrier, but send information indicating a failure in establishing the sidelink connection, where the information indicating a failure in establishing the sidelink connection is used by the Tx UE **110** to indicate, to the network device 120, that the Tx UE **110** fails to establish the sidelink connection to the Rx UE 130. Alternatively, in the eighth message, the Tx UE 110 may send, to the network device 120, both the information for requesting to re-indicate a primary carrier and information indicating a failure in establishing the sidelink connection.

In an example, in the eighth message, the Tx UE 110 may use one bit to indicate that the Tx UE 110 fails to indicate the network device 120 to establish the sidelink connection. A value of the bit may be "1" or "0". Alternatively, a non-numeric character string is used to indicate that the Tx UE 110 fails to indicate the network device 120 to establish the sidelink connection. For example, the non-numeric character string is, but is not limited to, an enumerated type value Enumerated {failure}.

S408: The network device 120 sends a ninth message to the Tx UE 110, where the ninth message includes information related to a re-indicated primary carrier.

In an example, the ninth message may include, but is not limited to, an RRCConnectionReconfiguration Message defined in 3GPP TS 36.331, an RRCReconfiguration Message defined in 3GPP TS 38.331, or a new message that has not been defined in 3GPP TS.

In another example, the information related to the re-indicated primary carrier may include: information indicating, by the network device 120, another carrier as the new primary carrier from the multiple carriers configured for the Tx UE 110, or information directly indicating the new primary carrier. For example, when the information that indicates the multi-carrier configuration and that is in the second message includes IDs of the multiple carriers, the network device 120 may specify the third ID in the IDs of the multiple carriers as an ID of the new primary carrier. In this case, the information that the network device 120 indicates, from the multiple carriers, another carrier as the new primary carrier may be represented as "3". Alternatively, the network device 120 may additionally and directly indicate an ID or a cell index of the new primary carrier.

In another example, the information related to the re-indicated primary carrier may further additionally include information indicating an activated state of the primary carrier. For example, the network device 120 may indicate, in the ninth message, the activated state of the primary carrier by using one bit whose value is "1" or whose value is "0"; or a character string "activated" is used to indicate the activated state of the primary carrier.

It should be noted that, when the Tx UE 110 and the network device 120 consider by default that the primary carrier is in an activated state, the information related to the re-indicated primary carrier may not include the information indicating the activated state of the primary carrier.

S409: The Tx UE 110 sends, to the network device 120, information for requesting a resource required for establishment of a sidelink connection. The step is the same as S303 in FIG. 3. For details, refer to the descriptions of S303. Details are not described herein again.

In addition, the Tx UE 110 may modify the setting based on the information that is received from the network device 120 and that is related to the re-indicated primary carrier, to perform sidelink communication on the re-indicated primary carrier.

S410: The network device 120 sends, to the Tx UE 110, information indicating a resource scheduled by the network device 120 for the Tx UE 110, where the resource is related to the re-indicated primary carrier and is to be used for establishing the sidelink connection between the Tx UE 110 and the Rx UE 130. The step is the same as S304 in FIG. 3. For details, refer to the descriptions of S304. Details are not described herein again.

S411: The Tx UE 110 sends, to the Rx UE 130 based on the resource that is related to the re-indicated primary carrier and that is allocated by the network device 120, information for requesting to establish a sidelink connection.

It should be noted that, after step S411, if the Tx UE 110 determines that the sidelink connection to the Rx UE 130 can be established based on the re-indicated primary carrier, S308 to S314 in FIG. 3 may continue to be performed; or if the Tx UE 110 determines that the sidelink connection to the Rx UE 130 cannot be established based on the re-indicated primary carrier, S407 to S411 in FIG. 4 may be performed again.

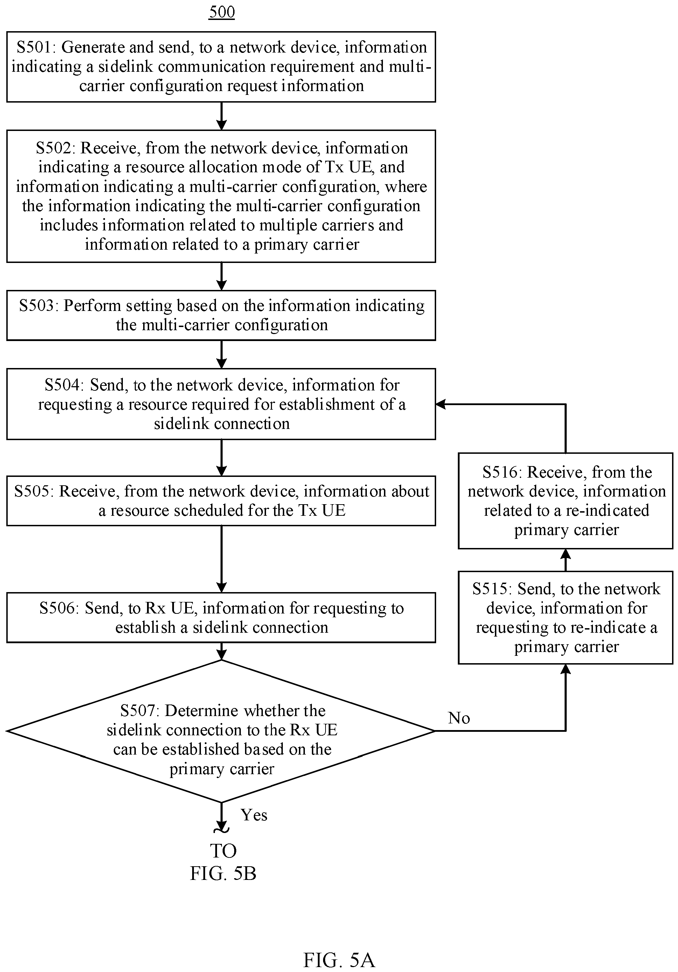

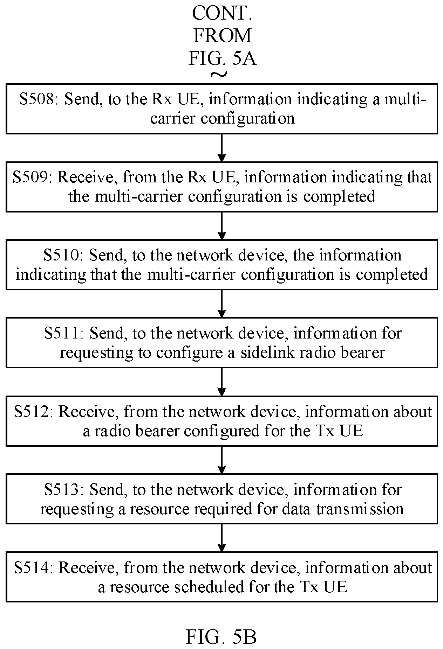

FIG. 5A and FIG. 5B are a schematic flowchart of a wireless communication method 500 for Tx UE 110 according to Embodiment 1 of this application. In the method 500, steps performed by the Tx UE 110 include the steps that are related to the Tx UE 110 and that are shown in FIG. 3 and FIG. 4.

It should be noted that although steps of the method are presented in a particular order in this embodiment of this application, an order of the steps may be changed in different embodiments. As shown in FIG. 5A and FIG. 5B, the wireless communication method 500 may include the following steps.

S501: Generate information indicating a sidelink communication requirement and multi-carrier configuration request information, and send these pieces of information to a network device 120 by using a first message. For this step, refer to the descriptions of S301 in FIG. 3. Details are not described herein again.

S502: Receive a second message from the network device 120, where the second message includes information indicating that a resource allocation mode of the Tx UE 110 is a resource allocation mode scheduled by a base station, and information indicating a multi-carrier configuration, where the information indicating the multi-carrier configuration includes information related to multiple carriers configured by the network device 120 for the Tx UE 110 and information related to a primary carrier. For this step, refer to the descriptions of S302 in FIG. 3. Details are not described herein again.

S503: Perform setting based on the information that is from the network device 120 and that indicates the multi-carrier configuration, to perform sidelink communication on at least one carrier (including the primary carrier) that is configured to be in an activated state and that is in the multiple carriers.

In an example, the Tx UE 110 may add, based on a parameter configuration of each carrier in the multiple carriers, each carrier corresponding to an identifier of each carrier.

S504: Send, to the network device 120, information for requesting a resource required for establishment of a sidelink connection. For this step, refer to the descriptions of S303 in FIG. 3. Details are not described herein again.

S505: Receive, from the network device 120, information indicating a resource scheduled by the network device 120 for the Tx UE 110, where the resource is related to the primary carrier and is to be used for establishing a sidelink connection between the Tx UE 110 and the Rx UE 130. For this step, refer to the descriptions of S304 in FIG. 3. Details are not described herein again.

S506: Send, to the Rx UE 130 based on the resource that is related to the primary carrier and that is allocated by the network device 120, information for requesting to establish a sidelink connection.

S507: Determine whether the sidelink connection to the Rx UE 130 can be established based on the primary carrier; and if the sidelink connection to the Rx UE 130 can be established based on the primary carrier, perform S508 to S514; or if the sidelink connection to the Rx UE 130 cannot be established based on the primary carrier, perform S515 and S516.

In an example, if the Tx UE 110 determines that the information indicating that establishment of the sidelink connection is completed is received from the Rx UE 130 within a threshold time period after the information for requesting to establish a sidelink connection is sent to the Rx UE 130, the Tx UE 110 determines that the sidelink connection to the Rx UE 130 can be established based on the primary carrier. If the Tx UE 110 determines that the information indicating that establishment of the sidelink connection is completed is not received from the Rx UE 130 within a threshold time period after the information for requesting to establish a sidelink connection is sent to the Rx UE 130, the Tx UE 110 determines that the sidelink connection to the Rx UE 130 cannot be established based on the primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

S508: Send a third message to the Rx UE 130, where the third message includes the information indicating the multi-carrier configuration. For this step, refer to the descriptions of S308 in FIG. 3. Details are not described herein again.

S509: Receive a fourth message from the Rx UE 130, where the fourth message includes information indicating that the multi-carrier configuration is completed, and the message may indicate, to the Tx UE 110, that the Rx UE 130 has completed the multi-carrier configuration. For this step, refer to the descriptions of S309 in FIG. 3. Details are not described herein again.

S510: Send a fifth message to the network device 120, where the fifth message includes the information indicating that the multi-carrier configuration is completed, to indicate, to the network device 120, that the Tx UE 110 and the Rx UE 130 have completed the multi-carrier configuration. For this step, refer to the descriptions of S310 in FIG. 3. Details are not described herein again.

S511: When there is data to transmit to the Rx UE 130, send a sixth message to the network device 120, where the sixth message includes information for requesting to establish a sidelink radio bearer. For this step, refer to the descriptions of S311 in FIG. 3. Details are not described herein again.

S512: Receive a seventh message from the network device 120, where the seventh message includes information indicating a radio bearer configured by the network device 120 for the Tx UE 110. For this step, refer to the descriptions of S312 in FIG. 3. Details are not described herein again.

S513: Send, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S514: Receive, from the network device 120, information indicating a resource scheduled by the network device 120 for the Tx UE 110, where the resource is used by the Tx UE 110 to send data to the Rx UE 130 based on the radio bearer configured by the network device 120.

S515: Send an eighth message to the network device 120, where the eighth message includes information for requesting to re-indicate a primary carrier. For this step, refer to the descriptions of S407 in FIG. 4. Details are not described herein again.

It should be noted that, in the eighth message, the Tx UE 110 may not send, to the network device 120, the information for requesting to re-indicate a primary carrier, but send information indicating a failure in establishing the sidelink connection, where the information indicating a failure in establishing the sidelink connection is used by the Tx UE 110 to indicate, to the network device 120, that the Tx UE 110 fails to establish the sidelink connection to the Rx UE 130. Alternatively, in the eighth message, the Tx UE 110 may send, to the network device 120, both the information for requesting to re-indicate a primary carrier and information indicating a failure in establishing the sidelink connection.

In an example, in the eighth message, the Tx UE 110 may use one bit to indicate that the Tx UE 110 fails to indicate the network device 120 to establish the sidelink connection. A value of the bit may be "1" or "0". Alternatively, a non-numeric character string is used to indicate that the Tx UE 110 fails to indicate the network device 120 to establish the sidelink connection. For example, the non-numeric character string is, but is not limited to, an enumerated type value Enumerated {failure}.

S516: Receive a ninth message from the network device 120, where the ninth message includes information related to a re-indicated primary carrier. For this step, refer to the descriptions of S408 in FIG. 4. Details are not described herein again.

In addition, the setting may be further modified based on the information that is received from the network device 120 and that is related to the re-indicated primary carrier, to perform sidelink communication on the re-indicated primary carrier.

It should be noted that after S516 is performed, the process returns to S504.

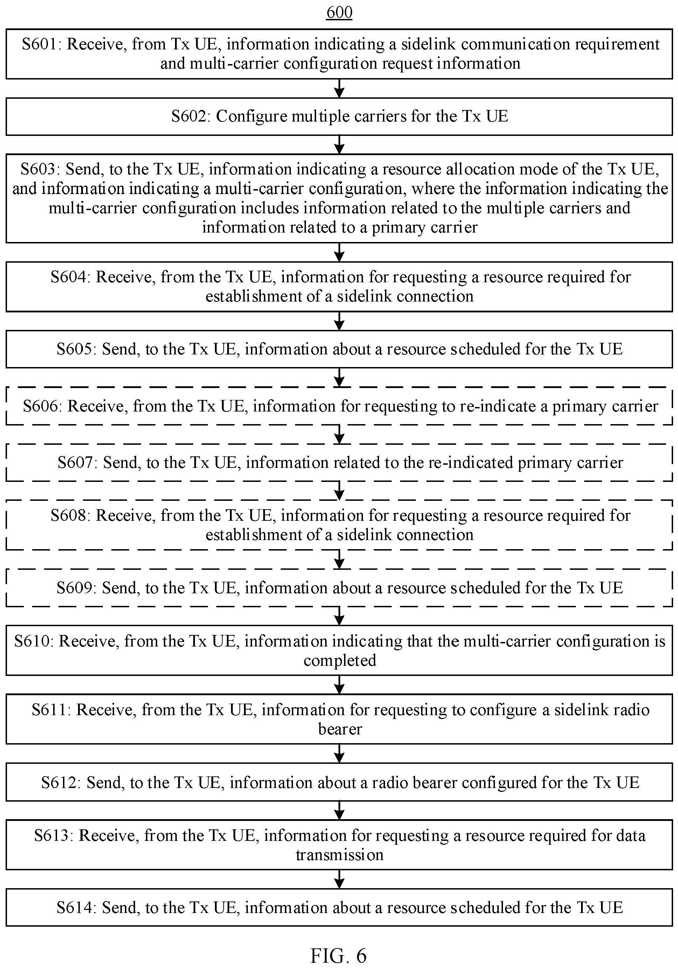

FIG. 6 is a schematic flowchart of a wireless communication method 600 for a network device 120 according to Embodiment 1 of this application. In the method 600, steps performed by the network device 120 include the steps that are related to the network device 120 and that are shown in FIG. 3 and FIG. 4.

It should be noted that although steps of the method are presented in a particular order in this embodiment of this application, an order of the steps may be changed in different embodiments. As shown in FIG. 6, the wireless communication method 600 may include the following steps.

S601: Receive a first message from Tx UE 110, where the first message includes information indicating a sidelink communication requirement and multi-carrier configuration request information. For this step, refer to the descriptions of S301 in FIG. 3. Details are not described herein again.

S602: Configure, based on a request from the Tx UE 110, multiple carriers for sidelink communication between the Tx UE 110 and Rx UE 130.

It should be noted that when the Tx UE 110 does not send the multi-carrier configuration request information to the network device 120, the network device 120 may determine whether multiple carriers need to be configured for the Tx UE 110. In an example, the network device 120 may determine, based on historical resource usage of the Tx UE 110, a BSR reported by the Tx UE 110, a current idle resource, and the like, whether multiple carriers need to be configured for the Tx UE 110.

S603: Send a second message to the Tx UE 110, where the second message includes information indicating that a resource allocation mode of the Tx UE 110 is a resource allocation mode scheduled by a base station, and information indicating a multi-carrier configuration, where the information indicating the multi-carrier configuration includes information related to the multiple carriers configured by the network device 120 for the Tx UE 110 and information related to a primary carrier (or referred to as a primary cell). For this step, refer to the descriptions of S302 in FIG. 3. Details are not described herein again.

S604: Receive, from the Tx UE 110, information for requesting a resource required for establishment of a sidelink connection, where the requested resource is related to the primary carrier indicated by the network device 120. For this step, refer to the descriptions of S303 in FIG. 3. Details are not described herein again.

S605: Send, to the Tx UE 110, information indicating a resource scheduled by the network device 120 for the Tx UE 110, where the resource is related to the primary carrier indicated by the network device 120 and is to be used for establishing the sidelink connection between the Tx UE 110 and the Rx UE 130. The resource may be scheduled based on the BSR reported by the Tx UE 110. For this step, refer to the descriptions of S304 in FIG. 3. Details are not described herein again.

S606: Optionally, receive an eighth message from the Tx UE 110, where the eighth message includes information for requesting to re-indicate a primary carrier. For this step, refer to the descriptions of S407 in FIG. 4. Details are not described herein again.

It should be noted that, in the eighth message, the information for requesting to re-indicate a primary carrier may not be included, but information indicating a failure in establishing the sidelink connection is included, where the information indicating a failure in establishing the sidelink connection is used by the Tx UE 110 to indicate, to the network device 120, that the Tx UE 110 fails to establish the sidelink connection to the Rx UE 130. Alternatively, in the eighth message, both the information for requesting to re-indicate a primary carrier and information indicating a failure in establishing the sidelink connection may be included.

In an example, in the eighth message, the Tx UE 110 may use one bit to indicate that the Tx UE 110 fails to indicate the network device 120 to establish the sidelink connection. A value of the bit may be "1" or "0". Alternatively, a non-numeric character string is used to indicate that the Tx UE 110 fails to indicate the network device 120 to establish the sidelink connection. For example, the non-numeric character string is, but is not limited to, an enumerated type value Enumerated {failure}.

S607: Optionally, send a ninth message to the Tx UE 110, where the ninth message includes information related to a re-indicated primary carrier. For this step, refer to the descriptions of S408 in FIG. 4. Details are not described herein again.

S608: Optionally, receive, from the Tx UE 110, information for requesting a resource required for establishment of a sidelink connection, where the requested resource is related to the primary carrier re-indicated by the network device 120. For this step, refer to the descriptions of S303 in FIG. 3. Details are not described herein again.

S609: Optionally, send, to the Tx UE 110, information indicating a resource scheduled by the network device 120 for the Tx UE 110, where the resource is related to the re-indicated primary carrier and is to be used for establishing the sidelink connection between the Tx UE 110 and the Rx UE 130. The resource may be scheduled based on the BSR reported by the Tx UE 110. For this step, refer to the descriptions of S304 in FIG. 3. Details are not described herein again.

S610: Receive a fifth message from the Tx UE 110, where the fifth message includes the information indicating that the multi-carrier configuration is completed, and the message may indicate, to the network device 120, that the Tx UE 110 and the Rx UE 130 have completed the multi-carrier configuration. For this step, refer to the descriptions of S310 in FIG. 3. Details are not described herein again.

S611: Receive a sixth message from the Tx UE 110, where the sixth message includes information for requesting to establish a sidelink radio bearer. For this step, refer to the descriptions of S311 in FIG. 3. Details are not described herein again.

S612: Send a seventh message to the Tx UE 110, where the seventh message includes information indicating a radio bearer configured by the network device 120 for the Tx UE 110. For this step, refer to the descriptions of S312 in FIG. 3. Details are not described herein again.

S613: Receive, from the Tx UE 110, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S614: Send, to the Tx UE 110, information indicating a resource scheduled by the network device 120 for the Tx UE 110, where the resource is used by the Tx UE 110 to send data to the Rx UE 130 based on the radio bearer configured by the network device 120, and the resource may be scheduled based on the BSR reported by the Tx UE 110. For this step, refer to the descriptions of S314 in FIG. 3. Details are not described herein again.

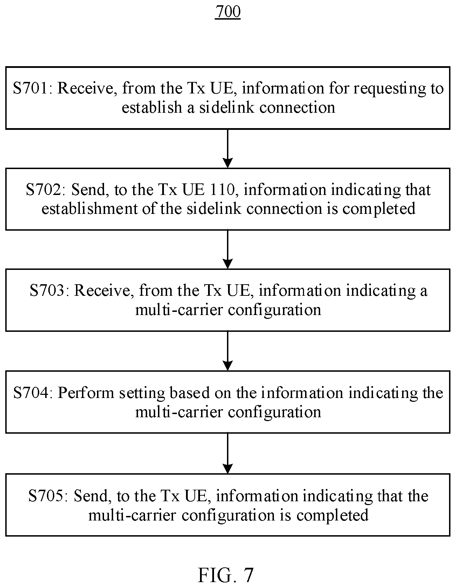

FIG. 7 is a schematic flowchart of a wireless communication method 700 for Rx UE 130 according to Embodiment 1 of this application. In the method 700, steps performed by the Rx UE 130 include the steps that are related to the Rx UE 130 and that are shown in FIG. 3 and FIG. 4.

It should be noted that although steps of the method are presented in a particular order in this embodiment of this application, an order of the steps may be changed in different embodiments. As shown in FIG. 7, the wireless communication method 700 may include the following steps.

S701: Receive, from Tx UE 110, information for requesting to establish a sidelink connection.

S702: Send, to the Tx UE 110, information indicating that establishment of the sidelink connection is completed.

S703: Receive a third message from the Tx UE 110, where the third message includes information indicating a multi-carrier configuration. For this step, refer to the descriptions of S308 in FIG. 3. Details are not described herein again.

S704: Perform setting based on the information that is from the Tx UE 110 and that indicates the multi-carrier configuration, to perform sidelink communication on at least one secondary carrier configured to be in an activated state.

In an example, the Rx UE 130 may add, based on a parameter configuration of each secondary carrier in the at least one secondary carrier that is configured to be in an activated state, each secondary carrier corresponding to an ID or a cell index of each secondary carrier.

S705: Send a fourth message to the Tx UE 110, where the fourth message includes information indicating that the multi-carrier configuration is completed, to indicate, to the Tx UE 110, that the Rx UE 130 has completed the multi-carrier configuration. For this step, refer to the descriptions of S309 in FIG. 3. Details are not described herein again.

### Embodiment 2

In this embodiment, before establishing a sidelink connection to Rx UE 130, Tx UE 110 requests a network device 120 to configure multiple carriers. The network device 120 configures, based on the request from the Tx UE 110, multiple carriers for sidelink communication between the Tx UE 110 and the Rx UE 130. The Tx UE 110 selects, from the multiple carriers, one carrier as a primary carrier for establishing the sidelink connection to the Rx UE 130.

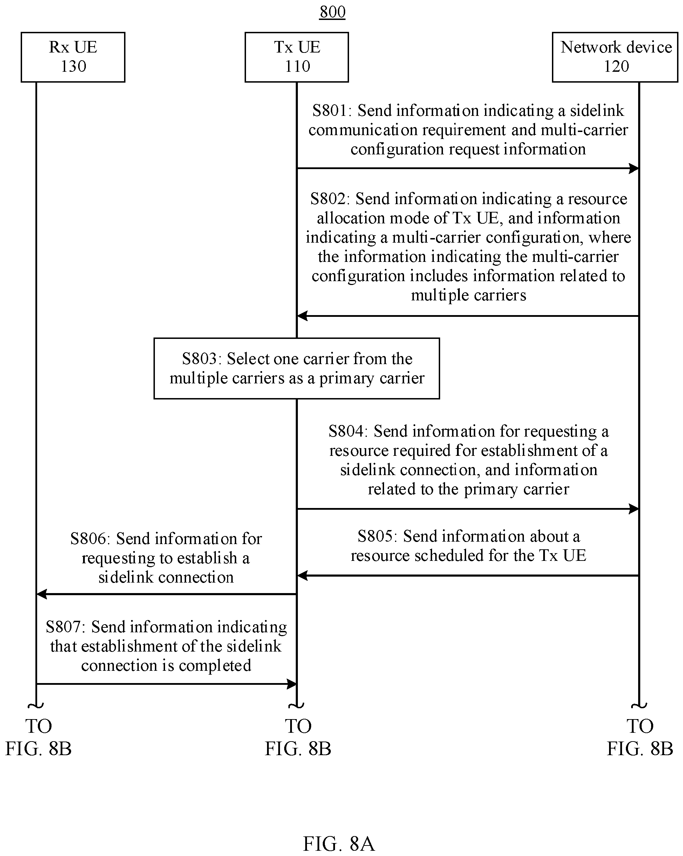

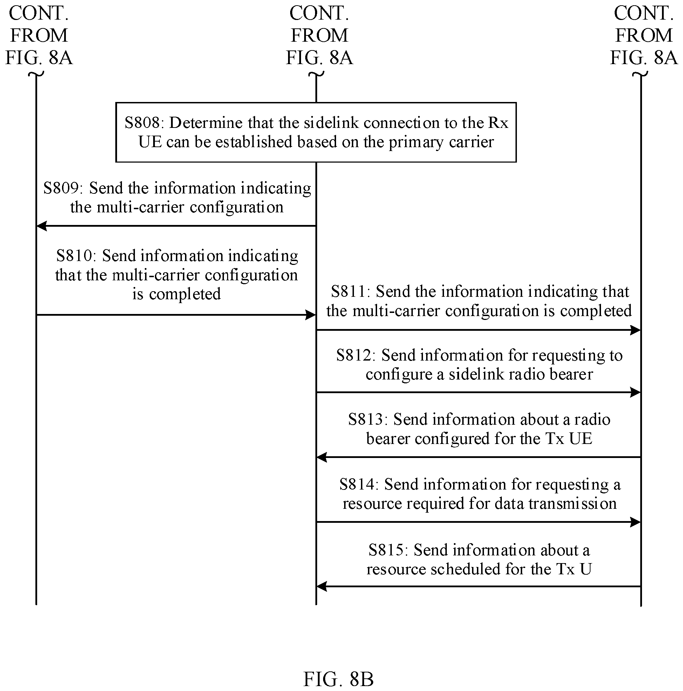

FIG. 8A and FIG. 8B are a schematic flowchart of a wireless communication method 800 according to Embodiment 2 of this application. In the method 800, the Tx UE 110 can establish a sidelink connection to Rx UE 130 based on a selected primary carrier.

It should be noted that although steps of the method are presented in a particular order in this embodiment of this application, an order of the steps may be changed in different embodiments. As shown in FIG. 8A and FIG. 8B, the wireless communication method 800 may include the following steps.

S801: The Tx UE 110 sends a first message to a network device 120, where the first message includes information indicating a sidelink communication requirement and multi-carrier configuration request information. For this step, refer to the descriptions of S301 in FIG. 3. Details are not described herein again.

It should be noted that the Tx UE 110 may not send the multi-carrier configuration request information to the network device 120, but the network device 120 determines whether multiple carriers need to be configured for the Tx UE 110.

S802: The network device 120 sends a second message to the Tx UE 110, where the second message includes information indicating that a resource allocation mode of the Tx UE 110 is a resource allocation mode scheduled by a base station, and information indicating a multi-carrier configuration, where the information indicating the multi-carrier configuration includes information related to multiple carriers configured by the network device 120 for the Tx UE 110.

In an example, the second message includes an RRCConnectionReconfiguration Message defined in 3GPP TS 36.331 or an RRCReconfiguration Message defined in 3GPP TS 38.331. In the RRCConnectionReconfiguration Message or the RRCReconfiguration Message, content of an IE (information element, information element) "SL-V2X-ConfigDedicated" may indicate that a resource allocation mode of the Tx UE 110 is a resource allocation mode based on scheduling by a base station or a resource allocation manner based on autonomous selection. Alternatively, the second message may include a new message that has not been defined in 3GPP TS.

In an example, the information indicating the multi-carrier configuration may include identifiers of the multiple carriers configured by the network device 120 for the Tx UE 110, for example, but not limited to, a carrier ID (Identifier, identifier) and a cell index. In addition, for each carrier, the information indicating the multi-carrier configuration may further include a parameter configuration of the carrier, for example, a frequency band, a frequency, bandwidth, and a subcarrier spacing.

In another example, the information indicating the multi-carrier configuration may additionally include an identifier of the Rx UE 130, for example, but not limited to, a destination layer-2 identifier (destination layer-2 ID) of the Rx UE 130, and an index of the Rx UE 130 in a plurality of pieces of Rx UE communicating with the Tx UE 110. The identifier of the Rx UE 130 is used to indicate that the multiple carriers configured by the network device 120 are used for sidelink communication between the Tx UE 110 and a specified piece of Rx UE 130.

In another example, the information indicating the multi-carrier configuration may further additionally include information indicating initial states of the multiple carriers, and the information indicating the initial states of the multiple carriers may include information indicating an activated or a deactivated state of each carrier in the multiple carriers. The Tx UE 110 needs to select, from the multiple carriers, one carrier as a primary carrier for establishing a sidelink communication connection to the Rx UE 130. Therefore, the network device 120 may configure all the multiple carriers to be in an activated state. In this way, when the Tx UE 110 has a data transmission requirement, a step of activating each carrier may be omitted, so that the Tx UE 110 obtains a transmission resource more quickly.

The network device 120 may indicate the initial states of the multiple carriers in the following several manners.
(1) An activated state of each carrier is indicated by using one bit. For example, when a value of the bit is "1" or "0", it indicates that the carrier is configured to be in an activated state. In addition, each bit indicating the activated state of each carrier or each secondary carrier may be located before or after an identifier of each carrier. Alternatively, bits indicating the activated state of all carriers may be located before or after identifiers of the multiple carriers, and an arrangement sequence of the bits may correspond to an arrangement sequence of the identifiers of the multiple carriers.

In another example, a character string "activated" may be used to indicate that a carrier is configured to be in an activated state. In addition, each character string indicating the activated state of each carrier may be located before or after an identifier of each carrier. Alternatively, character strings indicating the activated state of all carriers may be located before or after a plurality of identifiers of the multiple carriers, and an arrangement sequence of the character strings may correspond to an arrangement sequence of the plurality of identifiers of the multiple carriers.

In another example, an identifier of a carrier configured to be in an activated state may be indicated.

(2) One bit may be used to indicate that the multiple carriers are all configured to be in an activated state. For example, when a value of the bit is "1", it indicates that the multiple carriers are all configured to be in an activated state. Alternatively, when a value of the bit is "0", it indicates that the multiple carriers are all configured to be in an activated state.

In another example, one character string "activated" may alternatively be used to indicate that the multiple carriers are all configured to be in an activated state.

It should be noted that the network device 120 may alternatively separately send the information indicating that the resource allocation mode of the Tx UE 110 is the resource allocation mode scheduled by a base station, and the information indicating the multi-carrier configuration. For example, the network device 120 may send the two types of information by using two RRCReconfiguration messages.

It should be noted that when the Tx UE 110 does not send the multi-carrier configuration request information to the network device 120, the network device 120 may determine whether multiple carriers need to be configured for the Tx UE 110. In an example, the network device 120 may determine, based on historical resource usage of the Tx UE 110, a BSR reported by the Tx UE 110, a current idle resource, and the like, whether multiple carriers need to be configured for the Tx UE 110.

S803: The Tx UE 110 selects, from the multiple carriers indicated in the information indicating the multi-carrier configuration, one carrier as a primary carrier, and other carriers are to be used as secondary carriers, where the primary carrier is to be used for establishing a sidelink connection between the Tx UE 110 and the Rx UE 130, and the secondary carrier is to be used for providing an additional radio resource for sidelink communication between the Tx UE 110 and the Rx UE 130.

In an example, the Tx UE 110 may perform signal quality measurement on the multiple carriers indicated in the information indicating the multi-carrier configuration, and select, from the multiple carriers, one carrier with a best signal quality as the primary carrier.

In addition, the Tx UE 110 may perform setting based on the information that is received from the network device 120 and that indicates the multi-carrier configuration, to perform sidelink communication on the multiple carriers that are configured to be in an activated state. For example, the Tx UE 110 may add, based on a parameter configuration of each carrier in the multiple carriers, each carrier corresponding to an identifier of each carrier.

S804: The Tx UE 110 sends, to the network device 120, information for requesting a resource required for establishment of a sidelink connection, and information related to the primary carrier selected by the Tx UE 110.

In an example, the information for requesting the resource required for establishment of the sidelink connection may include an SR (scheduling request, scheduling request) and a BSR (buffer status report, buffer status report). The SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

The information related to the primary carrier selected by the Tx UE 110 is used to indicate, to the network device 120, the primary carrier related to the requested resource. The information may include, but is not limited to, an identifier of the primary carrier. For example, the identifier of the primary carrier may be a primary carrier ID, a cell index, a number, or the like. The identifier of the primary carrier is not specifically limited in this embodiment of this application.

In addition, the information related to the primary carrier selected by the Tx UE 110 may optionally include an identifier of the Rx UE 130, for example, but not limited to, a destination layer-2 identifier (destination layer-2 ID) of the Rx UE 130, and an index of the Rx UE 130 in a plurality of pieces of Rx UE communicating with the Tx UE 110. The identifier of the Rx UE 130 is used to indicate, to the network device 120, that the primary carrier selected by the Tx UE 110 is used for sidelink communication with a specified piece of Rx UE 130.

In another example, the Tx UE 110 may separately send, by using a tenth message, the information related to the primary carrier selected by the Tx UE 110. The tenth message may include a SidelinkUEInformation type message, a UEAssistanceInformation Message, or another new message that has not been defined in 3GPP TS.

S805: The network device 120 sends, to the Tx UE 110, information indicating a resource scheduled by the network device 120 for the Tx UE 110, where the resource is related to the primary carrier selected by the Tx UE 110 and is to be used for establishing the sidelink connection between the Tx UE 110 and the Rx UE 130. The network device 120 may schedule the resource based on the BSR reported by the Tx UE 110.

In an example, the network device 120 may send, to the Tx UE 110 by using a PDCCH, the information indicating the resource scheduled by the network device 120 for the Tx UE 110.

S806: The Tx UE 110 sends, to the Rx UE 130 based on the resource that is related to the primary carrier selected by the Tx UE 110 and that is allocated by the network device 120, information for requesting to establish a sidelink connection.

S807: The Rx UE 130 sends, to the Tx UE 110, information indicating that establishment of the sidelink connection is completed.

S808: The Tx UE 110 determines that the sidelink connection to the Rx UE 130 can be established based on the selected primary carrier.

In an example, if the Tx UE 110 determines that the information indicating that establishment of the sidelink connection is completed is received from the Rx UE 130 within a threshold time period after the information for requesting to establish a sidelink connection is sent to the Rx UE 130, the Tx UE 110 determines that the sidelink connection to the Rx UE 130 can be established based on the selected primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

When the Tx UE 110 determines that the sidelink connection to the Rx UE 130 can be established based on the selected primary carrier, the Tx UE 110 does not need to re-select a primary carrier.

S809: The Tx UE 110 sends a third message to the Rx UE 130, where the third message includes the information indicating the multi-carrier configuration.

In an example, the third message may include, but is not limited to, an RRCReconfigurationSidelink Message that is on a PC5 interface and that is defined in 3GPP TS 38.331, or another new message that has not been defined in 3GPP TS.

In an example, the information that indicates the multi-carrier configuration and that is sent by the Tx UE 110 to the Rx UE 130 may include an identifier of at least one secondary carrier in the multiple carriers configured by the network device 120 for the Tx UE 110, for example, but not limited to, a carrier ID and a cell index. In addition, for each secondary carrier, the information that indicates the multi-carrier configuration and that is sent by the Tx UE 110 to the Rx UE 130 may further include a parameter configuration of the secondary carrier, for example, a frequency band, a frequency, bandwidth, and a subcarrier spacing.

In another example, the information that indicates the multi-carrier configuration and that is sent by the Tx UE 110 to the Rx UE 130 may further additionally include information indicating an initial state of each secondary carrier, and the information indicating the initial state of each secondary carrier may include information indicating an activated state of each secondary carrier. For a manner in which the Tx UE 110 indicates the initial state of each secondary carrier, refer to the related descriptions in S802. Details are not described herein again.

S810: The Rx UE 130 sends a fourth message to the Tx UE 110, where the fourth message includes information indicating that the multi-carrier configuration is completed, to indicate, to the Tx UE 110, that the Rx UE 130 has completed the multi-carrier configuration. For this step, refer to the descriptions of S309 in FIG. 3. Details are not described herein again.

S811: The Tx UE 110 sends a fifth message to the network device 120, where the fifth message includes the information indicating that the multi-carrier configuration is completed, to indicate, to the network device 120, that the Tx UE 110 and the Rx UE 130 have completed the multi-carrier configuration. For this step, refer to the descriptions of S310 in FIG. 3. Details are not described herein again.

S812: When the Tx UE 110 has data to transmit to the Rx UE 130, the Tx UE 110 sends a sixth message to the network device 120, where the sixth message includes information for requesting to establish a sidelink radio bearer. For this step, refer to the descriptions of S311 in FIG. 3. Details are not described herein again.

S813: The network device 120 sends a seventh message to the Tx UE 110, where the seventh message includes information indicating a radio bearer configured by the network device 120 for the Tx UE 110. For this step, refer to the descriptions of S312 in FIG. 3. Details are not described herein again.

S814: The Tx UE 110 sends, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S815: The network device 120 sends, to the Tx UE 110, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110. For this step, refer to the descriptions of S314 in FIG. 3. Details are not described herein again.

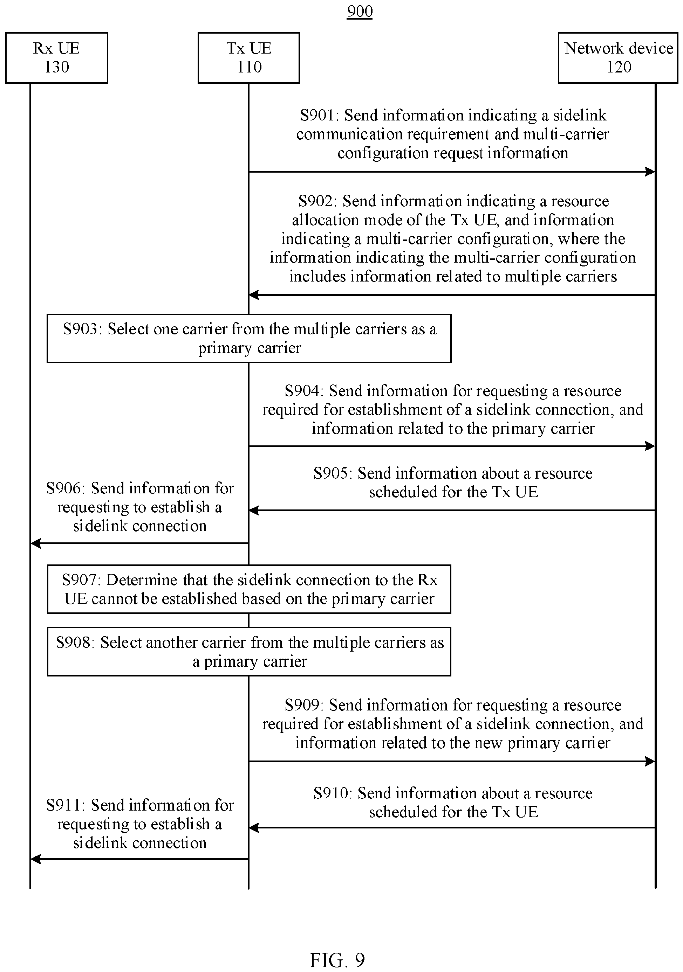

FIG. 9 is a schematic flowchart of a wireless communication method 900 according to Embodiment 2 of this application. In the method 900, Tx UE 110 cannot establish a sidelink connection to Rx UE 130 based on a selected primary carrier. In addition, another carrier is selected, as a primary carrier, from multiple carriers configured by the network device 120.

It should be noted that although steps of the method are presented in a particular order in this embodiment of this application, an order of the steps may be changed in different embodiments. As shown in FIG. 9, the wireless communication method 900 may include the following steps.

S901: The Tx UE 110 sends a first message to a network device 120, where the first message includes information indicating a sidelink communication requirement and multi-carrier configuration request information. For this step, refer to the descriptions of S801 in FIG. 8A. Details are not described herein again.

S902: The network device 120 sends a second message to the Tx UE 110, where the second message includes information indicating that a resource allocation mode of the Tx UE **110** is a resource allocation mode scheduled by a base station, and information indicating a multi-carrier configuration, where the information indicating the multi-carrier configuration includes information related to multiple carriers configured by the network device 120 for the Tx UE 110. For this step, refer to the descriptions of S802 in FIG. 8A. Details are not described herein again.

S903: After receiving the information indicating the multi-carrier configuration from the network device 120, the Tx UE 110 selects, from the multiple carriers, one carrier as a primary carrier. For this step, refer to the descriptions of S803 in FIG. 8A. Details are not described herein again.

S904: The Tx UE 110 sends, to the network device 120, information for requesting a resource required for establishment of a sidelink connection, and information related to the primary carrier selected by the Tx UE 110. For this step, refer to the descriptions of S804 in FIG. 8A. Details are not described herein again.

S905: The network device 120 sends, to the Tx UE 110, information indicating a resource scheduled by the network device 120 for the Tx UE 110, where the resource is related to the primary carrier selected by the Tx UE 110 and is to be used for establishing the sidelink connection between the Tx UE 110 and the Rx UE 130. For this step, refer to the descriptions of S805 in FIG. 8A. Details are not described herein again.

S906: The Tx UE 110 sends, to the Rx UE 130 based on the resource that is related to the primary carrier selected by the Tx UE 110 and that is allocated by the network device 120, information for requesting to establish a sidelink connection.

S907: The Tx UE 110 determines that the sidelink connection to the Rx UE 130 cannot be established based on the selected primary carrier.

In an example, if the Tx UE 110 determines that the information indicating that establishment of the sidelink connection is completed is not received from the Rx UE 130 within a threshold time period after the information for requesting to establish a sidelink connection is sent to the Rx UE 130, the Tx UE **110** determines that the sidelink connection to the Rx UE 130 cannot be established based on the selected primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

S908: The Tx UE 110 selects, from the multiple carriers indicated in the information indicating the multi-carrier configuration, another carrier (different from the carrier selected in S903) as a new primary carrier, and other carriers are to be used as secondary carriers.

In addition, the Tx UE 110 may modify the setting, to perform sidelink communication on the selected new primary carrier.

S909: The Tx UE 110 sends, to the network device 120, information for requesting a resource required for establishment of a sidelink connection, and information related to the new primary carrier selected by the Tx UE 110. For this step, refer to the descriptions of S804 in FIG. 8A. Details are not described herein again.

S910: The network device 120 sends, to the Tx UE 110, information indicating a resource scheduled by the network device 120 for the Tx UE 110, where the resource is related to the new primary carrier selected by the Tx UE 110 and is to be used for establishing the sidelink connection between the Tx UE 110 and the Rx UE 130. For this step, refer to the descriptions of S805 in FIG. 8A. Details are not described herein again.

S911: The Tx UE 110 sends, to the Rx UE 130 based on the resource that is related to the new primary carrier selected by the Tx UE 110 and that is allocated by the network device 120, information for requesting to establish a sidelink connection.

It should be noted that, after step S911, if the Tx UE 110 determines that the sidelink connection to the Rx UE 130 can be established based on the selected new primary carrier, S809 to S815 in FIG. 8B may continue to be performed; or if the Tx UE 110 determines that the sidelink connection to the Rx UE 130 cannot be established based on the new primary carrier, S908 to S911 in FIG. 9 may be performed again.

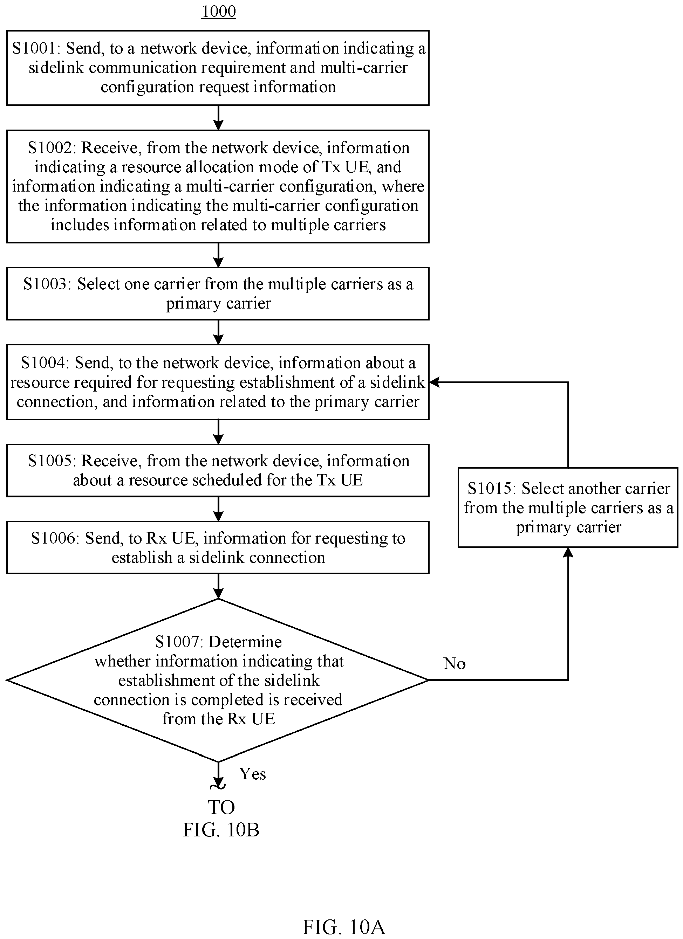

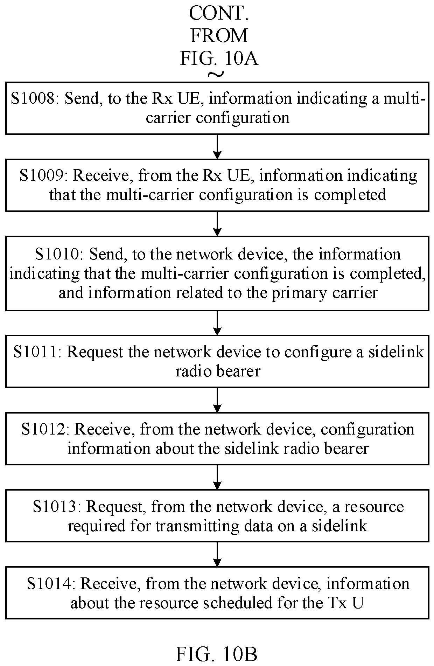

FIG. 10A and FIG. 10B are a schematic flowchart of a wireless communication method 1000 for Tx UE 110 according to Embodiment 2 of this application. In the method 1000, steps performed by the Tx UE 110 include the steps that are related to the Tx UE 110 and that are shown in FIG. 8A and FIG. 8B and FIG. 9.

It should be noted that although steps of the method are presented in a particular order in this embodiment of this application, an order of the steps may be changed in different embodiments. As shown in FIG. 10A and FIG. 10B, the wireless communication method 1000 may include the following steps.

S1001: Send a first message to a network device 120, where the first message includes information indicating a sidelink communication requirement and multi-carrier configuration request information. For this step, refer to the descriptions of S801 in FIG. 8A. Details are not described herein again.

S1002: Receive a second message from the network device 120, where the second message includes information indicating that a resource allocation mode of the Tx UE 110 is a resource allocation mode scheduled by a base station, and information indicating a multi-carrier configuration, where the information indicating the multi-carrier configuration includes information related to multiple carriers configured by the network device 120 for the Tx UE 110. For this step, refer to the descriptions of S802 in FIG. 8A. Details are not described herein again.

S1003: Select, from the multiple carriers indicated in the information indicating the multi-carrier configuration, one carrier as a primary carrier, and other carriers are to be used as secondary carriers. For this step, refer to the descriptions of S803 in FIG. 8A. Details are not described herein again.

S1004: Send, to the network device 120, information for requesting a resource required for establishment of a sidelink connection, and information related to the primary carrier selected by the Tx UE 110. For this step, refer to the descriptions of S804 in FIG. 8A. Details are not described herein again.

S1005: Receive, from the network device 120, information indicating a resource scheduled by the network device 120 for the Tx UE 110, where the resource is related to the primary carrier selected by the Tx UE 110 and is to be used for establishing a sidelink connection between the Tx UE 110 and the Rx UE 130. For this step, refer to the descriptions of S805 in FIG. 8A. Details are not described herein again.

S1006: Send, to the Rx UE 130 based on the resource that is related to the primary carrier selected by the Tx UE 110 and that is allocated by the network device 120, information for requesting to establish a sidelink connection.

S1007: Determine whether the sidelink connection to the Rx UE 130 can be established based on the selected primary carrier; and if the sidelink connection to the Rx UE 130 can be established based on the selected primary carrier, continue to perform S1008 to S1014; or if the sidelink connection to the Rx UE 130 cannot be established based on the selected primary carrier, continue to perform S1015.

In an example, if the Tx UE 110 determines that the information indicating that establishment of the sidelink connection is completed is received from the Rx UE 130 within a threshold time period after the information for requesting to establish a sidelink connection is sent to the Rx UE 130, the Tx UE 110 determines that the sidelink connection to the Rx UE 130 can be established based on the selected primary carrier, or if the Tx UE 110 determines that the information indicating that establishment of the sidelink connection is completed is not received from the Rx UE 130 within a threshold time period after the information for requesting to establish a sidelink connection is sent to the Rx UE 130, the Tx UE 110 determines that the sidelink connection to the Rx UE 130 cannot be established based on the selected primary carrier. For example, the threshold time period may be 10 seconds, 30 seconds, 1 minute, or the like. A specific value of the threshold time period is not limited in this embodiment of this application. The threshold time period may be preset in advance, or may be negotiated between the Tx UE and the Rx UE.

S1008: Send a third message to the Rx UE 130, where the third message includes the information indicating the multi-carrier configuration. For this step, refer to the descriptions of S809 in FIG. 8B. Details are not described herein again.

S1009: Receive a fourth message from the Rx UE 130, where the fourth message includes information indicating that the multi-carrier configuration is completed, and the message is used to indicate, to the Tx UE 110, that the Rx UE 130 has completed the multi-carrier configuration. For this step, refer to the descriptions of S810 in FIG. 8B. Details are not described herein again.

S1010: Send a fifth message to the network device 120, where the fifth message includes the information indicating that the multi-carrier configuration is completed, to indicate, to the network device 120, that the Tx UE 110 and the Rx UE 130 have completed the multi-carrier configuration. For this step, refer to the descriptions of S811 in FIG. 8B. Details are not described herein again.

S1011: When there is data to transmit to the Rx UE 130, send a sixth message to the network device 120, where the sixth message includes information for requesting to establish a sidelink radio bearer. For this step, refer to the descriptions of S812 in FIG. 8B. Details are not described herein again.

S1012: Receive a seventh message from the network device 120, where the seventh message includes information indicating a radio bearer configured by the network device 120 for the Tx UE 110. For this step, refer to the descriptions of S813 in FIG. 8B. Details are not described herein again.

S1013: Send, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1014: Receive, from the network device 120, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110. For this step, refer to the descriptions of S815 in FIG. 8B. Details are not described herein again.

S1015: Select, from the multiple carriers indicated in the information indicating the multi-carrier configuration, another carrier (different from the carrier selected in S903) as a new primary carrier, and other carriers are to be used as secondary carriers.

In addition, the Tx UE 110 may modify the setting, to perform sidelink communication on the selected new primary carrier.

It should be noted that after S1015 is performed, the process returns to S1004.

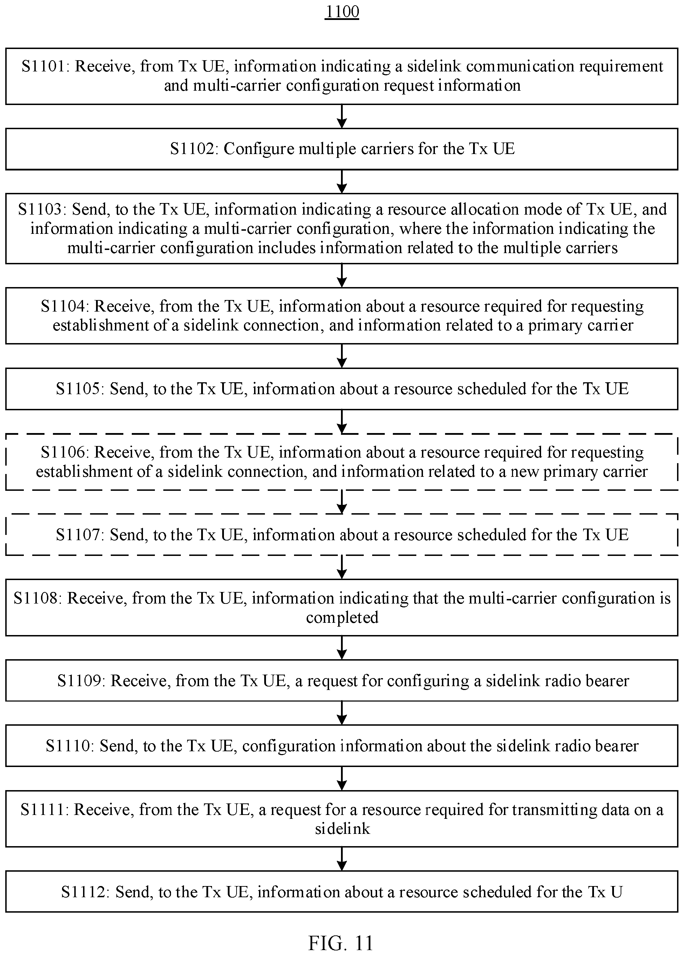

FIG. 11 is a schematic flowchart of a wireless communication method 1100 for a network device 120 according to Embodiment 2 of this application. In the method 1100, steps performed by the network device 120 include the steps that are related to the network device 120 and that are shown in FIG. 8A and FIG. 8B and FIG. 9.

It should be noted that although steps of the method are presented in a particular order in this embodiment of this application, an order of the steps may be changed in different embodiments. As shown in FIG. 11, the wireless communication method 1100 may include the following steps.

S1101: Receive a first message from Tx UE 110, where the first message includes information indicating a sidelink communication requirement and multi-carrier configuration request information. For this step, refer to the descriptions of S801 in FIG. 8A. Details are not described herein again.

S1102: Configure, based on a request from the Tx UE 110, multiple carriers for sidelink communication between the Tx UE 110 and Rx UE 130.

It should be noted that when the Tx UE 110 does not send the multi-carrier configuration request information to the network device 120, the network device 120 may determine whether multiple carriers need to be configured for the Tx UE 110. In an example, the network device 120 may determine, based on historical resource usage of the Tx UE 110, a BSR reported by the Tx UE 110, a current idle resource, and the like, whether multiple carriers need to be configured for the Tx UE 110.

S1103: Send a second message to the Tx UE 110, where the second message includes information indicating that a resource allocation mode of the Tx UE 110 is a resource allocation mode scheduled by a base station, and information indicating a multi-carrier configuration, where the information indicating the multi-carrier configuration includes information related to the multiple carriers configured by the network device 120 for the Tx UE 110. For this step, refer to the descriptions of S802 in FIG. 8A. Details are not described herein again.

S1104: Receive, from the Tx UE 110, information for requesting a resource required for establishment of a sidelink connection, and information related to the primary carrier selected by the Tx UE 110. For this step, refer to the descriptions of S804 in FIG. 8A. Details are not described herein again.

S1105: Send, to the Tx UE 110, information indicating a resource scheduled by the network device 120 for the Tx UE 110, where the resource is related to the primary carrier selected by the Tx UE 110 and is to be used for establishing the sidelink connection between the Tx UE 110 and the Rx UE 130. For this step, refer to the descriptions of S805 in FIG. 8A. Details are not described herein again.

S1106: Optionally, receive, from the Tx UE 110, information for requesting a resource required for establishment of a sidelink connection, and information related to the new primary carrier selected by the Tx UE 110. For this step, refer to the descriptions of S909 in FIG. 9. Details are not described herein again.

S1107: Optionally, send, to the Tx UE 110, information indicating a resource scheduled by the network device 120 for the Tx UE 110, where the resource is related to the new primary carrier selected by the Tx UE 110 and is to be used for establishing the sidelink connection between the Tx UE 110 and the Rx UE 130. For this step, refer to the descriptions of S910 in FIG. 9. Details are not described herein again.

S1108: Receive a fifth message from the Tx UE 110, where the fifth message includes the information indicating that the multi-carrier configuration is completed, and the message is used to indicate, to the network device 120, that the Tx UE 110 and the Rx UE 130 have completed the multi-carrier configuration. For this step, refer to the descriptions of S811 in FIG. 8B. Details are not described herein again.

S1109: Receive a sixth message from the Tx UE 110, where the sixth message includes information for requesting to establish a sidelink radio bearer. For this step, refer to the descriptions of S812 in FIG. 8B. Details are not described herein again.

S1110: Send a seventh message to the Tx UE 110, where the seventh message includes information indicating a radio bearer configured by the network device 120 for the Tx UE 110. For this step, refer to the descriptions of S813 in FIG. 8B. Details are not described herein again.

S1111: Receive, from the Tx UE 110, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1112: Send, to the Tx UE 110, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110. For this step, refer to the descriptions of S815 in FIG. 8B. Details are not described herein again.

It should be noted that the wireless communication method for the Rx UE 130 according to Embodiment 2 of this application is the same as the wireless communication method for the Rx UE 130 according to Embodiment 1 of this application. For details, refer to the descriptions in FIG. 7. Details are not described herein again.

### Embodiment 3

In this embodiment, Tx UE 110 first establishes a sidelink connection to Rx UE 130 based on a single carrier (used as a primary carrier) resource allocated by a network device 120, and then requests the network device 120 to configure multiple carriers. The network device 120 configures at least one secondary carrier for sidelink communication between the Tx UE 110 and the Rx UE 130 according to the request from the Tx UE 110.

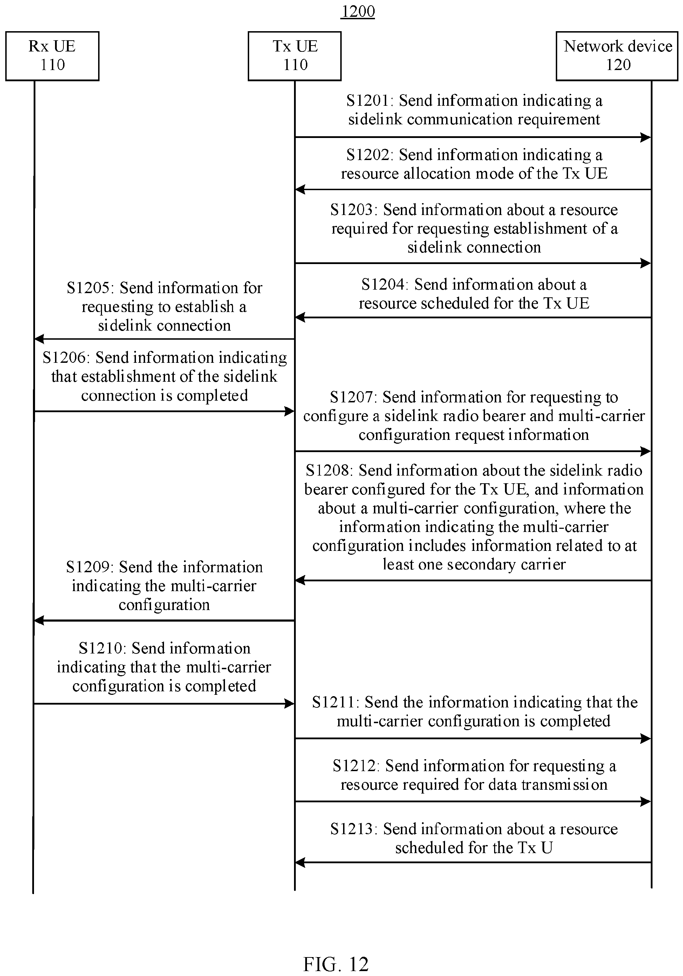

FIG. 12 is a schematic flowchart of a wireless communication method 1200 according to Embodiment 3 of this application. It should be noted that although steps of the method are presented in a particular order in this embodiment of this application, an order of the steps may be changed in different embodiments. As shown in FIG. 12, the wireless communication method 1200 may include the following steps.

S1201: Tx UE 110 sends a first message to a network device 120, where the first message includes information indicating a sidelink communication requirement.

In an example, the first message may include a SidelinkUEInformation type message. The SidelinkUEInformation type message is used by user equipment to indicate sidelink-related information to a network device (for example, a base station). In the SidelinkUEInformation type message, the information indicating the sidelink communication requirement may include information indicating a frequency that the user equipment has interest in and that is used to transmit and receive sidelink communication, information indicating a destination list, and the like.

S1202: The network device 120 sends a second message to the Tx UE 110, where the second message includes information indicating that a resource allocation mode of the Tx UE 110 is a resource allocation mode scheduled by a base station.

In an example, the second message includes an RRCConnectionReconfiguration Message defined in 3GPP TS 36.331 or an RRCReconfiguration Message defined in 3GPP TS 38.331. In the RRCConnectionReconfiguration Message or the RRCReconfiguration Message, content of an IE (information element, information element) "SL-V2X-ConfigDedicated" may indicate that a resource allocation mode of the Tx UE 110 is a resource allocation mode based on scheduling by a base station or a resource allocation manner based on autonomous selection.

S1203: The Tx UE 110 sends, to the network device 120, information for requesting a resource required for establishment of a sidelink connection.

In an example, the information for requesting the resource required for establishment of the sidelink connection may include an SR (scheduling request, scheduling request) and a BSR (buffer status report, buffer status report). The SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1204: The network device 120 sends, to the Tx UE 110, information indicating a resource scheduled by the network device 120 for the Tx UE 110, where the resource includes a single-carrier resource and is to be used for establishing the sidelink connection between the Tx UE 110 and the Rx UE 130. The network device 120 may schedule the resource based on the BSR reported by the Tx UE 110.

In an example, the network device 120 may send, to the Tx UE 110 by using a PDCCH, the information indicating the resource scheduled by the network device 120 for the Tx UE 110.

S1205: The Tx UE 110 sends, to the Rx UE 130 based on the single-carrier resource allocated by the network device 120, information for requesting to establish a sidelink connection.

It should be noted that the Tx UE 110 uses a single carrier allocated by the network device 120 as a primary carrier (or referred to as a primary cell), and may perform setting based on the information indicating the resource scheduled by the network device 120 for the Tx UE 110, to perform sidelink communication on the single carrier. For example, the Tx UE 110 may add, based on a parameter configuration of the single carrier, a carrier corresponding to an identifier of the single carrier.

S1206: The Rx UE 130 sends, to the Tx UE 110, information indicating that establishment of the sidelink connection is completed.

S1207: When the Tx UE 110 has data to transmit to the Rx UE 130, the Tx UE 110 sends a sixth message to the network device 120, where the sixth message includes information for requesting to establish a sidelink radio bearer, and multi-carrier configuration request information.

In an example, the sixth message may include the SidelinkUEInformation type message.

The Tx UE 110 may request, by using the SidelinkUEInformation type message, the network device 120 to configure multiple carriers in the following several forms.
(1) In the SidelinkUEInformation type message, the Tx UE 110 uses one bit to indicate whether the Tx UE 110 requests the network device 120 to configure multiple carriers. When a value of the bit is "1", it indicates that the Tx UE 110 requests the network device 120 to configure multiple carriers, that is, the value "1" represents the foregoing multi-carrier configuration request information; or when a value of the bit is 0, it indicates that the Tx UE 110 does not request the network device 120 to configure multiple carriers. Alternatively, when a value of the bit is "0", it indicates that the Tx UE 110 requests the network device 120 to configure multiple carriers, that is, the value "0" represents the foregoing multi-carrier configuration request information; or when a value of the bit is 1, it indicates that the Tx UE 110 does not request the network device 120 to configure multiple carriers.
(2) When the Tx UE 110 adds, to the SidelinkUEInformation type message, the multi-carrier configuration request information, it indicates that the Tx UE 110 requests the network device 120 to configure multiple carriers, or when the Tx UE 110 does not add, to the SidelinkUEInformation type message, the multi-carrier configuration request information, it indicates that the Tx UE 110 does not request the network device 120 to configure multiple carriers. In this case, the multi-carrier configuration request information may include any content, but is not limited to, for example, one bit whose value is "1" or one bit whose value is "0".

In another example, the Tx UE 110 may send, in two different messages, the information for requesting to establish the sidelink radio bearer and the multi-carrier configuration request information. In this case, the information used for requesting to establish the sidelink radio bearer may include the SidelinkUEInformation type message, and a message used to send the multi-carrier configuration request information may include a UEAssistanceInformation Message defined in 3GPP TS 36.331 or 38.331, or a new message that has not been defined in 3GPP TS. The UEAssistanceInformation Message is used by user equipment to indicate auxiliary information of the user equipment to a network device (for example, a base station). The UEAssistanceInformation Message may include information indicating a preference of the user equipment for a maximum PDSCH bandwidth configuration, information indicating an excessive quantity of repetitions on an MPDCCH, information indicating a service feature of an uplink logical channel, and the like.

For a form in which the Tx UE 110 requests, by using the UEAssistanceInformation Message or a newly defined message, the network device 120 to configure multiple carriers, refer to the foregoing related descriptions of the SidelinkUEInformation type message. Details are not described herein again.

It should be noted that the Tx UE 110 may not send the multi-carrier configuration request information to the network device 120, but the network device 120 determines whether multiple carriers need to be configured for the Tx UE 110.

S1208: The network device 120 sends a seventh message to the Tx UE 110, where the seventh message includes information indicating the radio bearer configured by the network device 120 for the Tx UE 110, and information indicating a multi-carrier configuration, where the information indicating the multi-carrier configuration includes information related to at least one secondary carrier configured by the network device 120 for the Tx UE 110.

In an example, the seventh message includes an RRCConnectionReconfiguration Message defined in 3GPP TS 36.331, an RRCReconfiguration Message defined in 3GPP TS 38.331, or a new message that has not been defined in 3GPP TS.

In an example, the information indicating the multi-carrier configuration may include an identifier of the at least one secondary carrier configured by the network device 120 for the Tx UE 110, for example, but not limited to, a secondary carrier ID (Identifier, identifier), a cell index, and a number. In addition, for each secondary carrier, the information indicating the multi-carrier configuration may further include a parameter configuration of the secondary carrier, for example, a frequency band, a frequency, bandwidth, and a subcarrier spacing.

In another example, the information indicating the multi-carrier configuration may additionally include an identifier of the Rx UE 130, for example, but not limited to, a destination layer-2 identifier (destination layer-2 ID) of the Rx UE 130, and an index of the Rx UE 130 in a plurality of pieces of Rx UE communicating with the Tx UE 110. The identifier of the Rx UE 130 is used to indicate that the at least one secondary carrier configured by the network device 120 is used for sidelink communication between the Tx UE 110 and a specified piece of Rx UE 130.

In another example, the information indicating the multi-carrier configuration may further additionally include information indicating an initial state of the at least one secondary carrier, and the information indicating the initial state of the at least one secondary carrier may include information indicating an activated or a deactivated state of each secondary carrier in the at least one secondary carrier. The network device 120 may configure all the at least one secondary carrier to be in an activated state. In this way, a step of activating the secondary carriers may be omitted, so that the Tx UE 110 obtains a transmission resource more quickly. Alternatively, the network device 120 may configure all secondary carriers to be in a deactivated state. In this way, a quantity of carriers monitored by the Rx UE 130 can be reduced, and power consumption of the Rx UE 130 can be reduced. Alternatively, the network device 120 may configure some secondary carriers to be in an activated state and some secondary carriers to be in a deactivated state. In this way, a step of activating some secondary carriers can be omitted, and a quantity of carriers monitored by the Rx UE 130 can also be reduced.

The network device 120 may indicate the initial state of the at least one secondary carrier in the following several manners.
(1) An activated state or a deactivated state of each secondary carrier is indicated by using one bit. For example, when a value of the bit is "1", it indicates that the secondary carrier is configured to be in an activated state; or when a value of the bit is "0", it indicates that the secondary carrier is configured to be in a deactivated state. Alternatively, when a value of the bit is "0", it indicates that the secondary carrier is configured to be in an activated state, or when a value of the bit is "1", it indicates that the secondary carrier is configured to be in a deactivated state. In addition, each bit indicating the activated or deactivated state of each secondary carrier may be located before or after an identifier of each secondary carrier. Alternatively, bits indicating the activated or deactivated state of all secondary carriers may be located before or after an identifier of the at least one secondary carrier, and an arrangement sequence of the bits may correspond to an arrangement sequence of the identifier of the at least one secondary carrier.

In another example, a character string "activated" may be used to indicate that a secondary carrier is configured to be in an activated state, and a character string "deactivated" is used to indicate that a secondary carrier is configured to be in a deactivated state. In addition, each character string indicating the activated or deactivated state of each secondary carrier may be located before or after the identifier of each secondary carrier. Alternatively, character strings indicating the activated or deactivated state of all secondary carriers may be located before or after an identifier of the at least one secondary carrier, and an arrangement order of the character strings may correspond to an arrangement order of the identifier of the at least one secondary carrier.

In another example, only an identifier of a secondary carrier configured to be in an activated state may be indicated, or only an identifier of a secondary carrier configured to be in a deactivated state may be indicated.

(2) When all the at least one secondary carrier is configured to be in an activated state, in addition to the manner in (1), in an example, one bit may be used to indicate that all the at least one secondary carrier is configured to be in an activated state. For example, when a value of the bit is "1", it indicates that all the at least one secondary carrier is configured to be in an activated state. Alternatively, when a value of the bit is "0", it indicates that all the at least one secondary carrier is configured to be in an activated state.

In another example, one character string "activated" may alternatively be used to indicate that all the at least one secondary carrier is configured to be in an activated state.

(3) When all the at least one secondary carrier is configured to be in a deactivated state, in addition to the manner in (1), in an example, one bit may be used to indicate that all the at least one secondary carrier is configured to be in a deactivated state. For example, when a value of the bit is "0", it indicates that all the at least one secondary carrier is configured to be in a deactivated state. Alternatively, when a value of the bit is "1", it indicates that all the at least one secondary carrier is configured to be in a deactivated state.

In another example, one character string "deactivated" may alternatively be used to indicate that all the at least one secondary carrier is configured to be in an activated state.

It should be noted that the network device 120 may alternatively separately send the information about the radio bearer configured by the network device 120 for the Tx UE 110 and the information indicating the multi-carrier configuration. For example, the network device 120 may send the two types of information by using two RRCReconfiguration messages.

It should be noted that when the Tx UE 110 does not send the multi-carrier configuration request information to the network device 120, the network device 120 may determine whether multiple carriers need to be configured for the Tx UE 110. In an example, the network device 120 may determine, based on historical resource usage of the Tx UE 110, a BSR reported by the Tx UE 110, a current idle resource, and the like, whether multiple carriers need to be configured for the Tx UE 110.

S1209: The Tx UE 110 sends a third message to the Rx UE 130, where the third message includes the information indicating the multi-carrier configuration.

In an example, the third message may include, but is not limited to, an RRCReconfigurationSidelink Message that is on a PC5 interface and that is defined in 3GPP TS 38.331, or another new message that has not been defined in 3GPP TS.

In an example, the information that indicates the multi-carrier configuration and that is sent by the Tx UE 110 to the Rx UE 130 may include the identifier of the at least one secondary carrier configured by the network device 120 for the Tx UE 110, for example, but not limited to, a secondary carrier ID and a cell index. In addition, for each secondary carrier, the information that indicates the multi-carrier configuration and that is sent by the Tx UE 110 to the Rx UE 130 may further include a parameter configuration of the secondary carrier, for example, a frequency band, a frequency, bandwidth, and a subcarrier spacing.

In another example, the information that indicates the multi-carrier configuration and that is sent by the Tx UE 110 to the Rx UE 130 may further additionally include information indicating an initial state of each secondary carrier, and the information indicating the initial state of each secondary carrier may include information indicating an activated or a deactivated state of each secondary carrier. For a manner in which the Tx UE 110 indicates the initial state of each secondary carrier, refer to the related descriptions in S1208. Details are not described herein again.

It should be noted that the Tx UE 110 may perform setting based on the information that is received from the network device 120 and that indicates the multi-carrier configuration, to perform sidelink communication on the at least one secondary carrier that is configured to be in an activated state. For example, the Tx UE 110 may add, based on a parameter configuration of each secondary carrier in at least one carrier, each secondary carrier corresponding to an identifier of each secondary carrier.

S1210: The Rx UE 130 sends a fourth message to the Tx UE 110, where the fourth message includes information indicating that the multi-carrier configuration is completed, to indicate, to the Tx UE 110, that the Rx UE 130 has completed the multi-carrier configuration.

In an example, the fourth message may include, but is not limited to, an RRCReconfigurationCompleteSidelink Message that is on a PC5 interface and that is defined in 3GPP TS 38.331, or another new message that has not been defined in 3GPP TS.

Before the Rx UE 130 sends, to the Tx UE 110, the information indicating that the multi-carrier configuration is completed, the Rx UE 130 may perform setting based on the information that is received from the Tx UE 110 and that indicates the multi-carrier configuration, to perform sidelink communication on at least one secondary carrier that is configured to be in an activated state. For example, the Rx UE 130 may add, based on a parameter configuration of each secondary carrier in the at least one secondary carrier that is configured to be in an activated state, each secondary carrier corresponding to an identifier of each secondary carrier.

S1211: The Tx UE 110 sends a fifth message to the network device 120, where the fifth message includes the information indicating that the multi-carrier configuration is completed, to indicate, to the network device 120, that the Tx UE 110 and the Rx UE 130 have completed the multi-carrier configuration.

In an example, the fifth message may include an RRCConnectionReconfigurationComplete Message defined in 3GPP TS 36.331 or an RRCReconfigurationComplete Message defined in 3GPP TS 38.331. Alternatively, the fifth message may include a new message that has not been defined in 3GPP TS.

S1212: The Tx UE 110 sends, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1213: The network device 120 sends, to the Tx UE 110, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110.

In an example, the network device 120 may send, to the Tx UE 110 by using a PDCCH, the information indicating the resource scheduled by the network device 120 for the Tx UE 110.

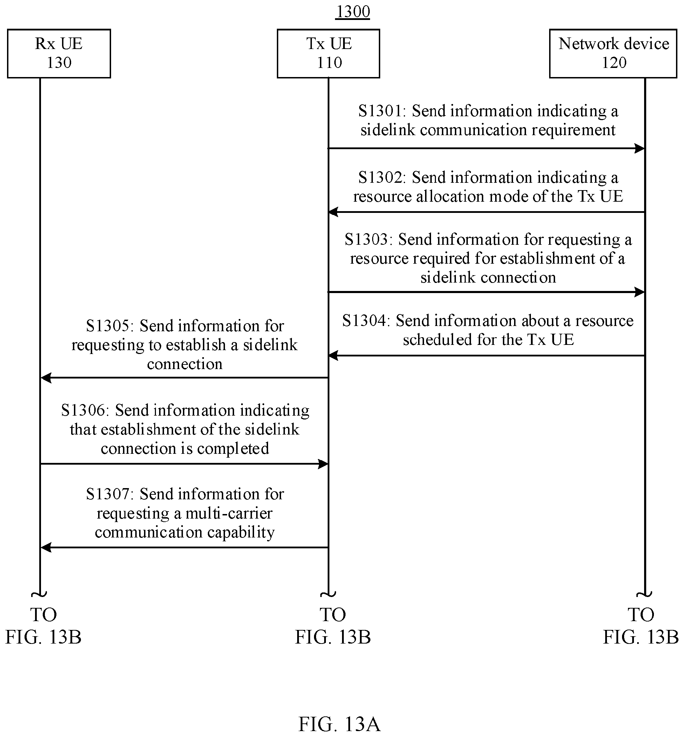

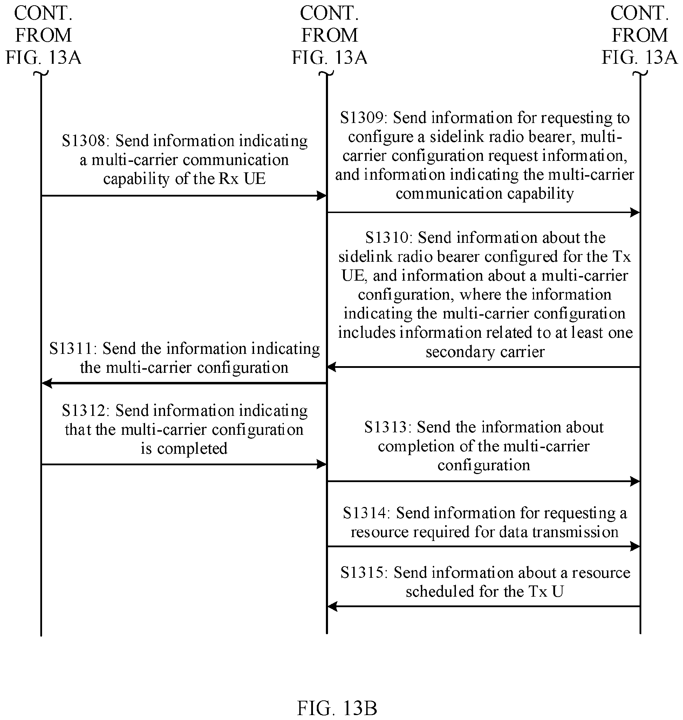

FIG. 13A and FIG. 13B are a schematic flowchart of a wireless communication method 1300 according to Embodiment 3 of this application. In the method 1300, after establishing a sidelink connection to Rx UE 130 based on a single carrier (used as a primary carrier) resource allocated by a network device 120, and before requesting the network device 120 to configure multiple carriers, Tx UE 110 requests a multi-carrier communication capability of the Rx UE 130 from the Rx UE 130. The multi-carrier communication capability includes at least one of a quantity of supported multiple carriers and frequency bands of the supported multiple carriers.

It should be noted that although steps of the method are presented in a particular order in this embodiment of this application, an order of the steps may be changed in different embodiments. As shown in FIG. 13A and FIG. 13B, the wireless communication method 1300 may include the following steps.

S1301: Tx UE 110 sends a first message to a network device 120, where the first message includes information indicating a sidelink communication requirement. For this step, refer to the descriptions of S1201 in FIG. 12. Details are not described herein again.

S1302: The network device 120 sends a second message to the Tx UE 110, where the second message includes information indicating that a resource allocation mode of the Tx UE 110 is a resource allocation mode scheduled by a base station. For this step, refer to the descriptions of S1202 in FIG. 12. Details are not described herein again.

S1303: The Tx UE 110 sends, to the network device 120, information for requesting a resource required for establishment of a sidelink connection. For this step, refer to the descriptions of S1203 in FIG. 12. Details are not described herein again.

S1304: The network device 120 sends, to the Tx UE 110, information indicating a resource scheduled by the network device 120 for the Tx UE 110, where the resource includes a single-carrier resource and is to be used for establishing the sidelink connection between the Tx UE 110 and the Rx UE 130. For this step, refer to the descriptions of S1204 in FIG. 12. Details are not described herein again.

S1305: The Tx UE 110 sends, to the Rx UE 130 based on the single-carrier resource allocated by the network device 120, information for requesting to establish a sidelink connection. For this step, refer to the descriptions of S1205 in FIG. 12. Details are not described herein again.

S1306: The Rx UE 130 sends, to the Tx UE 110, information indicating that establishment of the sidelink connection is completed.

S1307: The Tx UE 110 sends an eleventh message to the Rx UE 130, where the eleventh message includes information requesting for the multi-carrier communication capability.

In an example, the eleventh message may include, but is not limited to, an RRCReconfigurationSidelink Message that is on a PC5 interface and that is defined in 3GPP TS 38.331, a UECapabilityEnquiry Message defined in 3GPP TS 36.331 or 38.331, or another new message that has not been defined in 3GPP TS.

S1308: The Rx UE 130 sends a twelfth message to the Tx UE 110, where the twelfth message includes information indicating the multi-carrier communication capability of the Rx UE 130.

In an example, the twelfth message may include, but is not limited to, an RRCReconfigurationCompleteSidelink Message that is on a PC5 interface and that is defined in 3GPP TS 38.331, a UECapabilityInformatjino Message defined in 3GPP TS36.331 or 38.331, or another new message that has not been defined in 3GPP TS.

In an example, the information indicating the multi-carrier communication capability of the Rx UE 130 may include at least one of a quantity of multiple carriers and frequency bands of multiple carriers that are supported by the Rx UE 130.

It should be noted that the Tx UE 110 may not need to send, to the Rx UE 130 by using the eleventh message, the information for requesting the multi-carrier communication capability. The Rx UE 130 may send, when sending the information indicating that establishment of the sidelink connection is completed, the information indicating the multi-carrier communication capability of the Rx UE 130. Alternatively, after sending the information indicating that establishment of the sidelink connection is completed, the Rx UE 130 automatically sends, to the Tx UE 110 by using the twelfth message, the information indicating the multi-carrier communication capability of the Rx UE 130.

S1309: When the Tx UE 110 has data to transmit to the Rx UE 130, the Tx UE 110 sends a sixth message to the network device 120, where the sixth message includes information for requesting to establish a sidelink radio bearer, multi-carrier configuration request information, and information for indicating a multi-carrier communication capability.

For the sixth message, the information for requesting to establish the sidelink radio bearer, and the multi-carrier configuration request information, refer to the descriptions of S1207 in FIG. 12. Details are not described herein again.

In addition, the information that is sent by the Tx UE 110 to the network device 120 and that indicates a multi-carrier communication capability may include at least one of information indicating a multi-carrier communication capability of the Tx UE 110 and the information indicating the multi-carrier communication capability of the Rx UE 130. The information indicating the multi-carrier communication capability of the Tx UE 110 may include at least one of a quantity of multiple carriers and frequency bands of multiple carriers that are supported by the Tx UE 110.

S1310: The network device 120 sends a seventh message to the Tx UE 110, where the seventh message includes information indicating the radio bearer configured by the network device 120 for the Tx UE 110, and information indicating a multi-carrier configuration, where the information indicating the multi-carrier configuration includes information related to at least one secondary carrier configured by the network device 120 for the Tx UE 110. For this step, refer to the descriptions of S1208 in FIG. 12. Details are not described herein again.

S1311: The Tx UE 110 sends a third message to the Rx UE 130, where the third message includes the information indicating the multi-carrier configuration. For this step, refer to the descriptions of S1209 in FIG. 12. Details are not described herein again.

S1312: The Rx UE 130 sends a fourth message to the Tx UE 110, where the fourth message includes information indicating that the multi-carrier configuration is completed, to indicate, to the Tx UE 110, that the Rx UE 130 has completed the multi-carrier configuration. For this step, refer to the descriptions of S1210 in FIG. 12. Details are not described herein again.

S1313: The Tx UE 110 sends a fifth message to the network device 120, where the fifth message includes the information indicating that the multi-carrier configuration is completed, to indicate, to the network device 120, that the Tx UE 110 and the Rx UE 130 have completed the multi-carrier configuration. For this step, refer to the descriptions of S1211 in FIG. 12. Details are not described herein again.

S1314: The Tx UE 110 sends, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1315: The network device 120 sends, to the Tx UE 110, information indicating a resource scheduled by the network device 120 for the Tx UE 110, where the resource is used by the Tx UE 110 to send data to the Rx UE 130 based on the radio bearer configured by the network device 120, and the network device 120 may schedule the resource based on the BSR reported by the Tx UE 110. For this step, refer to the descriptions of S1213 in FIG. 12. Details are not described herein again.

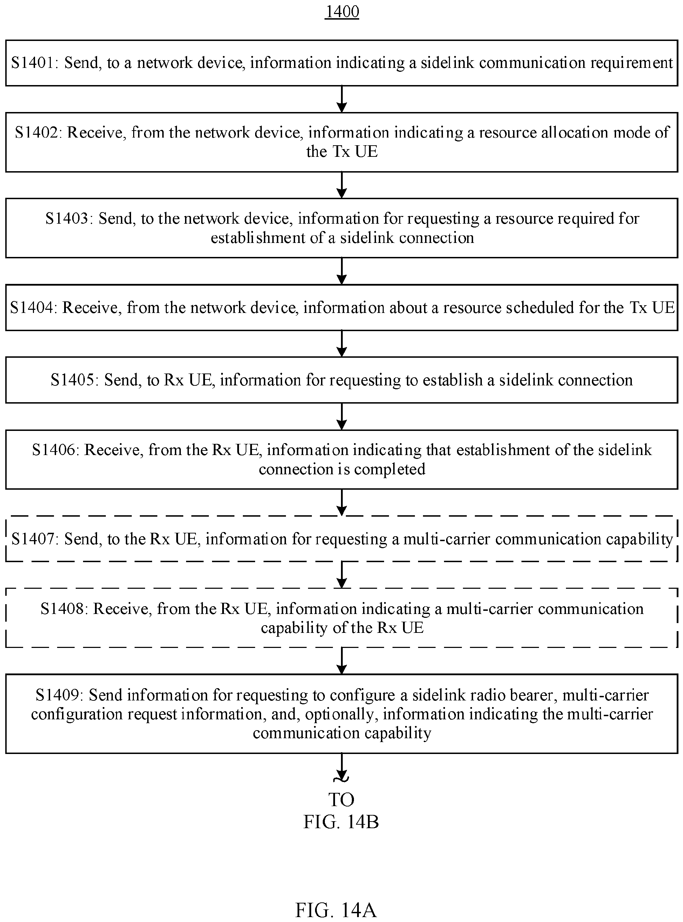

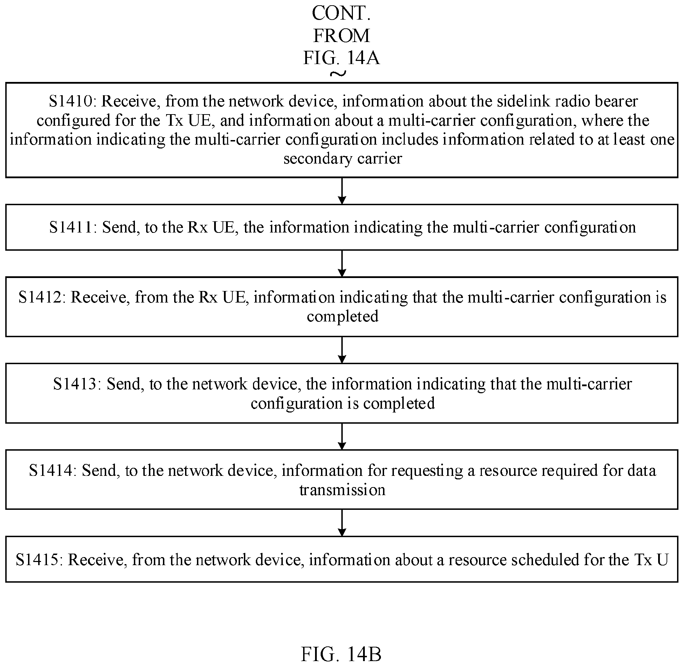

FIG. 14A and FIG. 14B are a schematic flowchart of a wireless communication method 1400 for Tx UE 110 according to Embodiment 3 of this application. In the method 1400, steps performed by the Tx UE 110 include the steps that are related to the Tx UE 110 and that are shown in FIG. 12 and FIG. 13A and FIG. 13B.

It should be noted that although steps of the method are presented in a particular order in this embodiment of this application, an order of the steps may be changed in different embodiments. As shown in FIG. 14A and FIG. 14B, the wireless communication method 1400 may include the following steps.

S1401: Send a first message to a network device 120, where the first message includes information indicating a sidelink communication requirement. For this step, refer to the descriptions of S1201 in FIG. 12. Details are not described herein again.

S1402: Receive a second message from the network device 120, where the second message includes information indicating that a resource allocation mode of the Tx UE 110 is a resource allocation mode scheduled by a base station. For this step, refer to the descriptions of S1202 in FIG. 12. Details are not described herein again.

S1403: Send, to the network device 120, information for requesting a resource required for establishment of a sidelink connection. For this step, refer to the descriptions of S1203 in FIG. 12. Details are not described herein again.

S1404: Receive, from the network device 120, information indicating a resource scheduled by the network device 120 for the Tx UE 110, where the resource includes a single-carrier resource and is to be used for establishing a sidelink connection between the Tx UE 110 and Rx UE 130. For this step, refer to the descriptions of S1204 in FIG. 12. Details are not described herein again.

S1405: Send, to the Rx UE 130 based on the single-carrier resource allocated by the network device 120, information for requesting to establish a sidelink connection. For this step, refer to the descriptions of S1205 in FIG. 12. Details are not described herein again.

S1406: Receive, from the Rx UE 130, information indicating that establishment of the sidelink connection is completed.

S1407: Optionally, send an eleventh message to the Rx UE 130, where the eleventh message includes information requesting for a multi-carrier communication capability. For this step, refer to the descriptions of S1307 in FIG. 13A. Details are not described herein again.

S1408: Optionally, receive a twelfth message from the Rx UE 130, where the twelfth message includes information indicating a multi-carrier communication capability of the Rx UE 130. For this step, refer to the descriptions of S1308 in FIG. 13B. Details are not described herein again.

It should be noted that the Tx UE 110 may not need to send, to the Rx UE 130 by using the eleventh message, the information for requesting the multi-carrier communication capability, but may receive the information indicating that establishment of the sidelink connection is completed and the information indicating the multi-carrier communication capability of the Rx UE 130 that are sent by the Rx UE 130 together. Alternatively, after receiving, from the Rx UE 130, the information indicating that establishment of the sidelink connection is completed, the Tx UE 110 may receive the twelfth message from the Rx UE 130, where the twelfth message includes the information indicating the multi-carrier communication capability of the Rx UE 130.

S1409: When there is data to transmit to the Rx UE 130, send a sixth message to the network device 120, where the sixth message includes information for requesting to establish a sidelink radio bearer, multi-carrier configuration request information, and, optionally, information for indicating a multi-carrier communication capability.

For the sixth message, the information for requesting to establish the sidelink radio bearer, and the multi-carrier configuration request information, refer to the descriptions of S1207 in FIG. 12. Details are not described herein again.

In addition, the information that is sent by the Tx UE 110 to the network device 120 and that indicates a multi-carrier communication capability may include at least one of information indicating a multi-carrier communication capability of the Tx UE 110 and the information indicating the multi-carrier communication capability of the Rx UE 130. The information indicating the multi-carrier communication capability of the Tx UE 110 may include at least one of a quantity of multiple carriers and frequency bands of multiple carriers that are supported by the Tx UE 110.

S1410: Receive a seventh message from the network device 120, where the seventh message includes information indicating the radio bearer configured by the network device 120 for the Tx UE 110, and information indicating a multi-carrier configuration, where the information indicating the multi-carrier configuration includes information related to at least one secondary carrier configured by the network device 120 for the Tx UE 110. For this step, refer to the descriptions of S1208 in FIG. 12. Details are not described herein again.

S1411: Send a third message to the Rx UE 130, where the third message includes the information indicating the multi-carrier configuration. For this step, refer to the descriptions of S1209 in FIG. 12. Details are not described herein again.

S1412: Receive a fourth message from the Rx UE 130, where the fourth message includes information indicating that the multi-carrier configuration is completed, to indicate, to the Tx UE 110, that the Rx UE 130 has completed the multi-carrier configuration. For this step, refer to the descriptions of S1210 in FIG. 12. Details are not described herein again.

S1413: Send a fifth message to the network device 120, where the fifth message includes the information indicating that the multi-carrier configuration is completed, to indicate, to the network device 120, that the Tx UE 110 and the Rx UE 130 have completed the multi-carrier configuration. For this step, refer to the descriptions of S1211 in FIG. 12. Details are not described herein again.

S1414: Send, to the network device 120, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1415: Receive, from the network device 120, information indicating a resource scheduled by the network device 120 for the Tx UE 110, where the resource is used by the Tx UE 110 to send data to the Rx UE 130 based on the radio bearer configured by the network device 120. For this step, refer to the descriptions of S1213 in FIG. 12. Details are not described herein again.

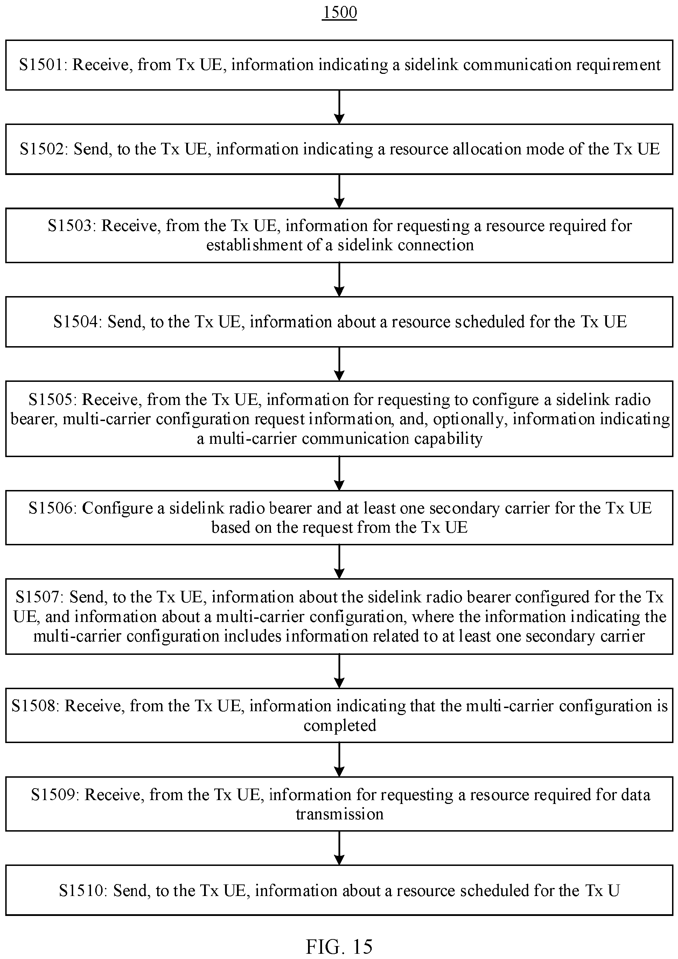

FIG. 15 is a schematic flowchart of a wireless communication method 1500 for a network device 120 according to Embodiment 3 of this application. In the method 1500, steps performed by the network device 120 include the steps that are related to the network device 120 and that are shown in FIG. 12 and FIG. 13A and FIG. 13B.

It should be noted that although steps of the method are presented in a particular order in this embodiment of this application, an order of the steps may be changed in different embodiments. As shown in FIG. 15, the wireless communication method 1500 may include the following steps.

S1501: Receive a first message from Tx UE 110, where the first message includes information indicating a sidelink communication requirement. For this step, refer to the descriptions of S1201 in FIG. 12. Details are not described herein again.

S1502: Send a second message to the Tx UE 110, where the second message includes information indicating that a resource allocation mode of the Tx UE 110 is a resource allocation mode scheduled by a base station. For this step, refer to the descriptions of S1202 in FIG. 12. Details are not described herein again.

S1503: Receive, from the Tx UE 110, information for requesting a resource required for establishment of a sidelink connection. For this step, refer to the descriptions of S1203 in FIG. 12. Details are not described herein again.

S1504: Send, to the Tx UE 110, information indicating a resource scheduled by the network device 120 for the Tx UE 110, where the resource includes a single-carrier resource and is to be used for establishing the sidelink connection between the Tx UE 110 and Rx UE 130. For this step, refer to the descriptions of S1204 in FIG. 12. Details are not described herein again.

S1505: Receive a sixth message from the Tx UE 110, where the sixth message includes information for requesting to establish a sidelink radio bearer, multi-carrier configuration request information, and, optionally, information for indicating a multi-carrier communication capability.

For the sixth message, the information for requesting to establish the sidelink radio bearer, and the multi-carrier configuration request information, refer to the descriptions of S1207 in FIG. 12. Details are not described herein again.

In addition, the information indicating a multi-carrier communication capability may include at least one of information indicating a multi-carrier communication capability of the Tx UE 110 and the information indicating a multi-carrier communication capability of the Rx UE 130.

S1506: Configure a sidelink radio bearer and at least one secondary carrier for the Tx UE 110 based on the request from the Tx UE 110.

When receiving, from the Tx UE 110, the information indicating the multi-carrier communication capability, the network device 120 may alternatively configure the at least one secondary carrier based on the information indicating the multi-carrier communication capability.

It should be noted that when the Tx UE 110 does not send the multi-carrier configuration request information to the network device 120, the network device 120 may determine whether the at least one secondary carrier needs to be configured for the Tx UE 110. In an example, the network device 120 may determine, based on historical resource usage of the Tx UE 110, a BSR reported by the Tx UE 110, a current idle resource, and the like, whether the at least one secondary carrier needs to be configured for the Tx UE 110.

S1507: Send a seventh message to the Tx UE 110, where the seventh message includes information indicating the radio bearer configured by the network device 120 for the Tx UE 110, and information indicating a multi-carrier configuration, where the information indicating the multi-carrier configuration includes information related to the at least one secondary carrier configured by the network device 120 for the Tx UE 110. For this step, refer to the descriptions of S1208 in FIG. 12. Details are not described herein again.

S1508: Receive a fifth message from the Tx UE 110, where the fifth message includes the information indicating that the multi-carrier configuration is completed, and the message is used to indicate, to the network device 120, that the Tx UE 110 and the Rx UE 130 have completed the multi-carrier configuration. For this step, refer to the descriptions of S1211 in FIG. 12. Details are not described herein again.

S1509: Receive, from the Tx UE 110, information for requesting a resource required for data transmission, for example, an SR and a BSR, where the SR is used by the Tx UE 110 to indicate, to the network device 120, that the Tx UE 110 has data to transmit, and the BSR is used by the Tx UE 110 to indicate, to the network device 120, a volume of the data to be transmitted by the Tx UE 110.

S1510: Send, to the Tx UE 110, information indicating a resource scheduled by the network device 120 for the Tx UE 110, where the resource is used by the Tx UE 110 to send data to the Rx UE 130 based on the radio bearer configured by the network device 120. For this step, refer to the descriptions of S1213 in FIG. 12. Details are not described herein again.

It should be noted that the wireless communication method for the Rx UE 130 according to Embodiment 3 of this application is basically the same as the wireless communication method for the Rx UE 130 according to Embodiment 1 of this application. A difference lies in that the following steps may be optionally included between S702 and S703.

An eleventh message is received from the Tx UE 110, where the eleventh message includes information requesting for a multi-carrier communication capability. For this step, refer to the descriptions of S1307 in FIG. 13A. Details are not described herein again.

A twelfth message is sent to the Tx UE 110, where the twelfth message includes information indicating the multi-carrier communication capability of the Rx UE 130. For this step, refer to the descriptions of S1307 in FIG. 13A. Details are not described herein again.

It should be noted that the Rx UE 130 may not need to receive, from the Tx UE 110, the eleventh message including the information for requesting the multi-carrier communication capability. The Rx UE 130 may send, when sending the information indicating that establishment of the sidelink connection is completed (that is, S702), the information indicating the multi-carrier communication capability of the Rx UE 130. Alternatively, after sending the information indicating that establishment of the sidelink connection is completed (that is, S702), the Rx UE 130 automatically sends, to the Tx UE 110 by using the twelfth message, the information indicating the multi-carrier communication capability of the Rx UE 130.

In this embodiment of this application, a process required for performing sidelink multi-carrier communication between the Tx UE 110 and the Rx UE 130 is defined. In addition, when the Tx UE 110 performs sidelink communication by using multiple carriers, communication quality of the Tx UE 110 can be ensured even if the Tx UE 110 has a large data communication requirement.

Further, for the multiple carriers configured by the network device 120 for the Tx UE 110, concepts of a primary carrier and a secondary carrier are introduced in embodiments of this application. The primary carrier is used for establishing a sidelink connection between the Tx UE 110 and the Rx UE 130, and other carriers in the multiple carriers are used as secondary carriers. The division of the primary carrier and the secondary carrier helps to control sidelink communication between the Tx UE 110 and the Rx UE 130.

Further, when indicating, to the Tx UE 110, the multiple carriers configured by the network device 120, the network device 120 may indicate information about an activated state or a deactivated state of each carrier in the multiple carriers. In this way, a step of activating a secondary carrier may be omitted, so that the Tx UE 110 obtains a transmission resource more quickly; and/or, a quantity of carriers monitored by the Rx UE 130 is reduced, and power consumption of the Rx UE 130 is reduced.

Further, when requesting the network device 120 to configure the multiple carriers, the Tx UE 110 reports the multi-carrier communication capability of the Tx UE 110 and/or the multi-carrier communication capability of the Rx UE 130, so that a resource waste caused by a case in which the Rx UE 130 does not support some carriers configured by the network device 120 for the Tx UE 110 is avoided.

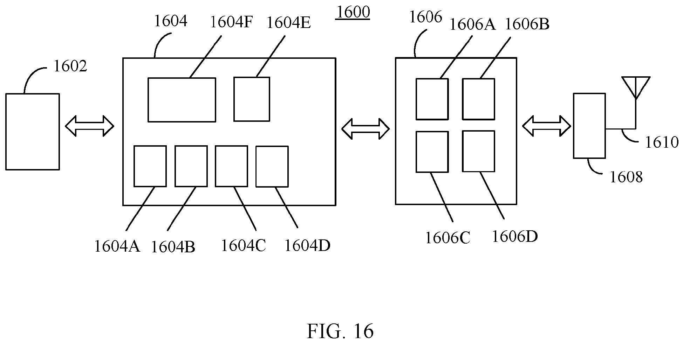

FIG. 16 shows a schematic module diagram of a device 1600 according to an embodiment of this application. The device 1600 may include the Tx UE 110, the network device 120, and the Rx UE 130 in the foregoing embodiments.

In some embodiments, the device 1600 may include at least an application circuit 1602, a baseband circuit 1604, a radio frequency (RF) circuit 1606, a front-end module (FEM) circuit 1608, and one or more antennas 610 that are coupled together as shown in the figure. Components of the shown device 1600 may be included in UE. For example, the application circuit 1602 may be included in a processor 102 of UE 10, and the baseband circuit 1604, the radio frequency (RF) circuit 1606, the front-end module (FEM) circuit 1608, and the one or more antennas 610 may be included in a communication module 104 of the UE 10. In some embodiments, the device 1600 may include fewer elements. In some embodiments, the device 1600 may include an additional element, such as a memory/storage device, a display, a camera, a sensor, or an input/output (I/O) interface.

The application circuit 1602 may include one or more application processors. For example, the application circuit 1602 may include a circuit, for example, but not limited to, one or more single-core or multi-core processors. The processor (one or more) may include any combination of a general-purpose processor and a dedicated processor (for example, a graphics processing unit or an application processor). The processor may be coupled to a memory/storage apparatus or may include a memory/storage apparatus, and may be configured to run instructions stored in the memory/storage apparatus, so that the device 1600 can implement any one or more methods described with reference to FIG. 3 to FIG. 15. The instructions stored in the memory/storage apparatus may include the following: When the instructions are run by the processor, the device 1600 is enabled to implement any one or more methods described with reference to FIG. 3 to FIG. 15.

The baseband circuit 1604 may include a circuit, for example, but not limited to, one or more single-core or multi-core processors. The baseband circuit 1604 may include one or more baseband processors or control logic, to process a baseband signal received from a signal receiving path of the RF circuit 1606, and generate a baseband signal used for a signal sending path of the RF circuit 1606. The baseband processing circuit 1604 may be interfaced with the application circuit 1602, to generate and process a baseband signal and control an operation performed by the RF circuit 1606. For example, in some embodiments, the baseband circuit 1604 may include a third-generation (3G) baseband processor 1604A, a fourth-generation (4G) baseband processor 1604B, a fifth-generation (5G) baseband processor 1604C, or (one or more) other baseband processors 1604D used for another existing generation or a generation (for example, the sixth generation (6G)) under development or to be developed in the future. The baseband circuit 1604 (for example, one or more of the baseband processors 1604A to 1604D) may process various radio control functions that support communication with one or more radio networks via the RF circuit 1606. In another embodiment, some or all functions of the baseband processors 1604A to 1604D may be included in a module stored in a memory 1604G, and these functions may be performed by using a central processing unit (CPU) 1604E. The radio control functions may include but are not limited to: signal modulation/demodulation, encoding/decoding, radio frequency shift, and the like. In some embodiments, a modulation/demodulation circuit of the baseband circuit 1604 may include fast Fourier transform (FFT), precoding, and/or constellation mapping/demapping functions. In some embodiments, an encoding/decoding circuit of the baseband circuit 1604 may include convolution, tail-biting (tail-biting) convolution, turbo, Viterbi (Viterbi), and/or low-density parity-check (LDPC) encoder/decoder functions. Embodiments of modulation/demodulation and encoder/decoder functions are not limited to these examples, and another proper function may be included in another embodiment.

In some embodiments, the baseband circuit 1604 may include one or more audio digital signal processors (DSP) 1604F. The (one or more) audio DSPs 1604F may include an element for compression/decompression and echo cancellation, and may include another proper processing element in another embodiment. In some embodiments, components of the baseband circuit may be properly combined in a single chip or a single chipset, or arranged on a same circuit board. In some embodiments, some or all components of the baseband circuit 1604 and the application circuit 1602 may be implemented together, for example, on a system-on-a-chip (SOC).

In some embodiments, the baseband circuit 1604 may provide communication compatible with one or more radio technologies. For example, in some embodiments, the baseband circuit 1604 may support communication with an evolved universal terrestrial radio access network (E-UTRAN) or another wireless metropolitan area network (WMAN), a wireless local area network (WLAN), or a wireless personal area network (WPAN). In an embodiment in which the baseband circuit 1604 is configured to support radio communication of more than one wireless protocol, the baseband circuit 1604 may be referred to as a multimode baseband circuit.

The RF circuit 1606 may support communication with a wireless network by using modulated electromagnetic radiation through a non-solid medium. In various embodiments, the RF circuit 1606 may include a switch, a filter, an amplifier, and the like to assist in communication with a wireless network. The RF circuit 1606 may include a signal receiving path. The signal receiving path may include a circuit that performs down-conversion on an RF signal received from the FEM circuit 1608 and provides a baseband signal for the baseband circuit 1604. The RF circuit 1606 may further include a signal sending path. The signal sending path may include a circuit that performs up-conversion on a baseband signal provided by the baseband circuit 1604 and provides an RF output signal for the FEM circuit 1608 for transmission.

In some embodiments, the signal receiving path of the RF circuit 1606 may include a frequency mixer circuit 1606a, an amplifier circuit 1606b, and a filter circuit 1606c. In some embodiments, the signal sending path of the RF circuit 1606 may include a filter circuit 1606c and a frequency mixer circuit 1606a. The RF circuit 1606 may further include a synthesizer circuit 1606d, and the synthesizer circuit is configured to synthesize a frequency for use by frequency mixer circuits 1606a of the signal receiving path and the signal sending path. In some embodiments, the frequency mixer circuit 1606a of the signal receiving path may be configured as performing down-conversion, based on a synthesized frequency provided by the synthesizer circuit 1606d, on an RF signal received from the FEM circuit 1608. The amplifier circuit 1606b may be configured to amplify a down-converted signal, and the filter circuit 1606c may be a low-pass filter (LPF) or a band-pass filter (BPF) configured to remove an unwanted signal from down-converted signals to generate an output baseband signal. The output baseband signal may be provided to the baseband circuit 1604 for further processing. In some embodiments, an output baseband signal may be a zero-frequency baseband signal, but this is not necessarily required. In some embodiments, the frequency mixer circuit 1606a of the signal receiving path may include a passive frequency mixer, but a scope of the embodiments is not limited in this regard.

In some embodiments, the frequency mixer circuit 1606a of the signal sending path may be configured to up-convert an input baseband signal based on a synthesized frequency provided by the synthesizer circuit 1606d, to generate an RF output signal used for the FEM circuit 1608. A baseband signal may be provided by the baseband circuit 1604, and may be filtered by the filter circuit 1606c.

In some embodiments, the frequency mixer circuit 1606a of the signal receiving path and the frequency mixer circuit 1606a of the signal sending path may include two or more frequency mixers and may be arranged as being respectively used for orthogonal down-conversion and/or up-conversion.

In some embodiments, the frequency mixer circuit 1606a of the signal receiving path and the frequency mixer circuit 1606a of the signal sending path may include two or more frequency mixers and may be arranged as being used for image suppression (for example, Hartley image suppression). In some embodiments, the frequency mixer circuit 1606a of the signal receiving path and the frequency mixer circuit 1606a of the signal sending path may be arranged as being respectively used for direct down-conversion and/or direct up-conversion. In some embodiments, the frequency mixer circuit 1606a of the signal receiving path and the frequency mixer circuit 1606a of the signal sending path may be configured for a superheterodyne operation.

In some embodiments, an output baseband signal and an input baseband signal may be analog baseband signals, but a scope of the embodiments is not limited in this regard. In some alternative embodiments, an output baseband signal and an input baseband signal may be digital baseband signals. In these alternative embodiments, the RF circuit 1606 may include an analog-to-digital converter (ADC) and digital-to-analog converter (DAC) circuit, and the baseband circuit 1604 may include a digital baseband interface to communicate with the RF circuit 1606.

In some dual-mode embodiments, a separate radio IC circuit may be provided to process a signal of each spectrum, but a scope of the embodiments is not limited in this regard.

In some embodiments, the synthesizer circuit 1606d may be a fractional N-type synthesizer or a fractional N/N+1-type synthesizer, but a scope of the embodiments is not limited in this regard because a frequency synthesizer of another type may be proper. For example, the synthesizer circuit 1606d may be a delta-sigma synthesizer, a frequency multiplier, or a synthesizer that includes a phase-locked loop with a frequency divider.

The synthesizer circuit 1606d may be configured to synthesize, based on a frequency input and a frequency divider control input, an output frequency for use by the frequency mixer circuit 1606a of the RF circuit 1606. In some embodiments, the synthesizer circuit 1606d may be a fractional N/N+1-type synthesizer.

In some embodiments, the frequency input may be provided by a voltage-controlled oscillator (VCO), but this is not necessarily required. The frequency divider control input may be provided by the baseband circuit 1604 or the application processor 1602 based on a required output frequency. In some embodiments, the frequency divider control input (for example, N) may be determined from a look-up table based on a channel indicated by the application processor 1602.

The synthesizer circuit 1606d of the RF circuit 1606 may include a frequency divider, a delay-locked loop (DLL), a multiplexer, and a phase accumulator. In some embodiments, the frequency divider may be a dual-mode frequency divider (DMD), and the phase accumulator may be a digital phase accumulator (DPA). In some embodiments, the DMD may be configured to divide an input signal by N or N+1 (for example, based on a carry output) to provide a fractional division ratio. In some example embodiments, the DLL may include a cascaded set of tunable delay elements, a phase detector, a charge pump, and a D-type flip-flop. In these embodiments, the delay elements may be configured to decompose a VCO period into a maximum of Nd equal phase groups, where Nd is a quantity of delay elements in a delay line. In this way, the DLL provides a negative feedback, to help ensure that a total delay through the delay line is one VCO cycle.

In some embodiments, the synthesizer circuit 1606d may be configured to generate a carrier frequency as an output frequency. However, in another embodiment, an output frequency may be a multiple of a carrier frequency (for example, twice of the carrier frequency, or four times of the carrier frequency) and is used together with a quadrature generator and a frequency divider circuit, to generate, at the carrier frequency, a plurality of signals having a plurality of phases different from each other. In some embodiments, an output frequency may be an LO frequency (fLO). In some embodiments, the RF circuit 1606 may include an IQ/polarity converter.

The FEM circuit 1608 may include a signal receiving path. The signal receiving path may include a circuit configured to operate an RF signal received from one or more antennas 610, amplify a received signal, and provide an amplified version of the received signal to the RF circuit 1606 for further processing. The FEM circuit 1608 may further include a signal sending path. The signal sending path may include a circuit that is configured to amplify a signal that is provided by the RF circuit 1606 and that is used for transmission so that the signal is transmitted by one or more antennas in the one or more antennas 610. In various embodiments, amplification performed through a signal sending path or a signal receiving path may be completed only in the RF circuit 1606, only in the FEM 1608, or in both the RF circuit 1606 and the FEM 1608.

In some embodiments, the FEM circuit 1608 may include a TX/RX switch, to switch between a sending mode operation and a receiving mode operation. A FEM circuit may include a signal receiving path and a signal sending path. The signal receiving path of the FEM circuit may include a low noise amplifier (LNA) to amplify a received RF signal, and provide an amplified received RF signal as an output (for example, to the RF circuit 1606). The signal receiving path of the FEM circuit 1608 may include a power amplifier (PA) for amplifying an input RF signal (for example, provided by the RF circuit 1606) and one or more filters for generating an RF signal for subsequent transmission (for example, through one or more antennas of the one or more antennas 610).

Although this application is described with reference to example embodiments, this does not mean that features of the present invention are limited to the implementations. On the contrary, a purpose of describing the present invention with reference to the implementations is to cover other selections or modifications that may be derived based on the claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in a case that no conflict occurs.

Furthermore, various operations will be described as a plurality of discrete operations in a manner that is most conducive to understanding illustrative embodiments. However, a described order should not be construed as implying that these operations need to depend on the order. In particular, these operations do not need to be performed in the rendered order.

As used herein, a term "module" or "unit" may mean, be, or include: an application-specific integrated circuit (ASIC), an electronic circuit, a (shared, special-purpose, or group) processor and/or a memory that executes one or more software or firmware programs, a composite logic circuit, and/or another proper component that provides the described functions.

In the accompanying drawings, some structure or method features may be shown in a particular arrangement and/or order. However, it should be understood that such a particular arrangement and/or order may not be required. In some embodiments, these features may be arranged in a manner and/or order different from that shown in the illustrative accompanying drawings. In addition, inclusion of the structure or method features in a particular figure does not imply that such features are required in all embodiments, and in some embodiments, these features may not be included or may be combined with other features.

Embodiments of a mechanism disclosed in this application may be implemented in hardware, software, firmware, or a combination of these implementations. Embodiments of this application may be implemented as a computer program or program code executed in a programmable system. The programmable system includes a plurality of processors, a storage system (including volatile and non-volatile memories and/or storage elements), a plurality of input devices, and a plurality of output devices.

The program code may be configured to input instructions, to perform functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code may alternatively be implemented by using an assembly language or a machine language when needed. Actually, the mechanisms described in this application are not limited to a scope of any particular programming language. In any case, the language may be a compiled language or an interpretive language.

In some cases, the disclosed embodiments may be implemented by hardware, firmware, software, or any combination thereof. In some cases, one or more aspects of at least some embodiments may be implemented by expressive instructions stored in a computer-readable storage medium. The instructions represent various logics in a processor, and when the instructions are read by a machine, the machine is enabled to manufacture logics for performing the technologies described in this application. These representations referred to as "IP cores" may be stored in a tangible computer-readable storage medium, and provided for a plurality of customers or production facilities for loading into a manufacturing machine that actually manufactures the logic or the processor.

Such a computer-readable storage media may include but is not limited to non-transient tangible arrangements of articles manufactured or formed by machines or devices. The computer-readable storage media includes storage media, for example, a hard disk or any other type of disk including a floppy disk, a compact disc, a compact disc read-only memory (CD-ROM), a compact disc rewritable (CD-RW), or a magneto-optical disc; a semiconductor device, for example, a read-only memory (ROM), a random access memory (RAM) such as a dynamic random access memory (DRAM) or a static random access memory (SRAM), an erasable programmable read-only memory (EPROM), a flash memory, or an electrically erasable programmable read-only memory (EEPROM); a phase change memory (PCM); a magnetic card or an optical card; or any other type of proper medium for storing electronic instructions.

Therefore, embodiments of this application further include a non-transient computer-readable storage medium. The medium includes instructions or design data, for example, a hardware description language (HDL), and defines a structure, a circuit, an apparatus, a processor, and/or a system feature described in this application.

## Claims

1. A wireless communication method for transmission user equipment, transmission UE, Tx UE, comprising:
determining (S301) multi-carrier configuration request information, to request a network device to configure multiple carriers for sidelink communication between the transmission user equipment and reception user equipment, reception UE, Rx UE;
sending (S301) the multi-carrier configuration request information to the network device; and
receiving (S302), from the network device, first information indicating a multi-carrier configuration, wherein the first information comprises information related to multiple carriers configured by the network device for the transmission user equipment; wherein the first information comprises information that the network device indicates, from the multiple carriers, one carrier to be used as a primary carrier;
wherein the method further comprises:
determining (S507) whether a sidelink connection used for the sidelink communication can be established to the reception user equipment based on the primary carrier; and
when it is determined that the sidelink connection cannot be established to the reception user equipment based on the primary carrier within a threshold time period after information for requesting the sidelink connection is sent to the reception user equipment, sending at least one of the following pieces of information to the network device: information about a failure in establishing the sidelink connection and information for requesting the network device to re-indicate a primary carrier.

2. The wireless communication method according to claim 1, wherein the method further comprises:
selecting one carrier from the multiple carriers as a primary carrier.

3. The wireless communication method according to claim 2, wherein the method further comprises:
determining whether a sidelink connection used for the sidelink communication can be established to the reception user equipment based on the primary carrier; and
when it is determined that the sidelink connection cannot be established to the reception user equipment based on the primary carrier, selecting another carrier from the multiple carriers as the primary carrier.

4. The wireless communication method according to any one of claims 1 to 3, wherein the method further comprises:
after receiving the first information from the network device, sending, to the network device, information for requesting a resource required for establishment of the sidelink connection, wherein the resource is related to the primary carrier.

5. The wireless communication method according to any one of claims 1 to 4, wherein the method further comprises:
before sending the multi-carrier configuration request information to the network device, receiving, from the reception user equipment, the information indicating that establishment of the sidelink connection is completed.

6. The wireless communication method according to claim 5, wherein the multi-carrier configuration request information comprises information indicating a multi-carrier communication capability of at least one of the transmission user equipment and the reception user equipment.

7. The wireless communication method according to claim 6, wherein the information about the multi-carrier communication capability comprises at least one of a quantity of supported multiple carriers and frequency bands of the supported multiple carriers.

8. The wireless communication method according to any one of claims 1 to 7, wherein the first information comprises information indicating an activated/deactivated state of each carrier or each secondary carrier in the multiple carriers.

9. The wireless communication method according to claim 8, wherein the method comprises:
performing, based on the first information, the sidelink communication on at least one carrier or at least one secondary carrier that is in the multiple carriers and that is indicated as being in an activated state.

10. The wireless communication method according to any one of claims 1 to 9, wherein the method further comprises:
sending, to the reception user equipment, second information indicating the multi-carrier configuration, to notify the reception user equipment that the multiple carriers have been configured for the sidelink communication between the transmission user equipment and the reception user equipment, wherein the second information comprises information indicating an activated/deactivated state of each secondary carrier in the multiple carriers.

11. A machine-readable medium, wherein the medium stores instructions, and when the instructions are run on a transmission user equipment, the transmission user equipment is configured to perform the method according to any one of claims 1 to 10.

12. A transmission user equipment, transmission UE, Tx UE, comprising:
a processor; and
a memory, wherein instructions are stored in the memory, and when the instructions are run by the processor, the transmission user equipment is configured to perform the method according to any one of claims 1 to 10.

## Patentansprüche

1. Drahtloses Kommunikationsverfahren für Übertragungsbenutzergeräte, Übertragungs-UE, Tx-UE, umfassend:
Bestimmen (S301) von Multiträger-Konfigurationsanforderungsinformationen, um eine Netzwerkvorrichtung aufzufordern, mehrere Träger für die Sidelink-Kommunikation zwischen dem Sendebenutzergerät und dem Empfangsbenutzergerät, Empfangs-UE, Rx-UE, zu konfigurieren; Senden (S301) der Multiträger-Konfigurationsanforderungsinformationen an die Netzwerkvorrichtung; und
Empfangen (S302), von der Netzwerkvorrichtung, erster Informationen, die eine Multiträger-Konfiguration angeben, wobei die ersten Informationen Informationen umfassen, die sich auf mehrere Träger beziehen, die durch die Netzwerkvorrichtung für das Übertragungsbenutzergerät konfiguriert sind; wobei die ersten Informationen Informationen umfassen, die die Netzwerkvorrichtung von den mehreren Trägern angibt, dass ein Träger als primärer Träger verwendet werden soll;
wobei das Verfahren ferner Folgendes umfasst:
Bestimmen (S507), ob eine Sidelink-Verbindung, die für die Sidelink-Kommunikation verwendet wird, zu dem Empfangsbenutzergerät basierend auf dem primären Träger hergestellt werden kann; und
wenn bestimmt wird, dass die Sidelink-Verbindung zum Empfangsbenutzergerät basierend auf dem primären Träger nicht innerhalb eines Schwellenzeitraums hergestellt werden kann, nachdem Informationen zum Anfordern der Sidelink-Verbindung an das Empfangsbenutzergerät gesendet wurden, Senden von mindestens einer der folgenden Informationen an die Netzwerkvorrichtung: Informationen über einen Fehler beim Herstellen der Sidelink-Verbindung und Informationen zum Anfordern der Netzwerkvorrichtung, einen primären Träger erneut anzugeben.

2. Drahtloses Kommunikationsverfahren nach Anspruch 1, wobei das Verfahren ferner Folgendes umfasst:
Auswählen eines Trägers aus den mehreren Trägern als primären Träger.

3. Drahtloses Kommunikationsverfahren nach Anspruch 2, wobei das Verfahren ferner Folgendes umfasst:
Bestimmen, ob eine Sidelink-Verbindung, die für die Sidelink-Kommunikation verwendet wird, zu dem Empfangsbenutzergerät basierend auf dem primären Träger hergestellt werden kann; und wenn bestimmt wird, dass die Sidelink-Verbindung nicht mit des Empfangsbenutzergeräts basierend auf dem primären Träger hergestellt werden kann, Auswählen eines anderen Trägers aus den mehreren Trägern als primären Träger.

4. Drahtloses Kommunikationsverfahren nach einem der Ansprüche 1 bis 3, wobei das Verfahren ferner Folgendes umfasst:
nach Empfang der ersten Informationen von der Netzwerkvorrichtung, Senden, an die Netzwerkvorrichtung, von Informationen zum Anfordern einer Ressource, die zum Aufbau der Sidelink-Verbindung erforderlich ist, wobei die Ressource mit dem primären Träger verbunden ist.

5. Drahtloses Kommunikationsverfahren nach einem der Ansprüche 1 bis 4, wobei das Verfahren ferner Folgendes umfasst:
vor dem Senden der Multiträger-Konfigurationsanforderungsinformationen an die Netzwerkvorrichtung, Empfangen, von dem Empfangsbenutzergerät, der Informationen, die angeben, dass der Aufbau der Sidelink-Verbindung abgeschlossen ist.

6. Drahtloses Kommunikationsverfahren nach Anspruch 5, wobei die Multiträger-Konfigurationsanforderungsinformationen Informationen umfassen, die eine Multiträger-Kommunikationsfähigkeit von zumindest einer des Sendebenutzergerätsund des Empfangsbenutzergeräts angeben.

7. Drahtloses Kommunikationsverfahren nach Anspruch 6, wobei die Informationen über die Multiträger-Kommunikationsfähigkeit mindestens einen von einer Menge von unterstützten mehreren Trägern und Frequenzbändern der unterstützten mehreren Träger umfassen.

8. Drahtloses Kommunikationsverfahren nach einem der Ansprüche 1 bis 7, wobei die ersten Informationen Informationen umfassen, die einen aktivierten/deaktivierten Zustand jedes Trägers oder jedes sekundären Trägers in den mehreren Trägern angeben.

9. Verfahren nach Anspruch 8, wobei das Verfahren ferner Folgendes umfasst:
Durchführen der Sidelink-Kommunikation auf mindestens einem Träger oder mindestens einem sekundären Träger, der sich in den mehreren Trägern befindet und der als in einem aktivierten Zustand angezeigt wird, basierend auf den ersten Informationen.

10. Drahtloses Kommunikationsverfahren nach einem der Ansprüche 1 bis 9, wobei das Verfahren ferner Folgendes umfasst:
Senden von zweiten Informationen, an das Empfangsbenutzergerät, die die Multiträger-Konfiguration angeben, um das Empfangsbenutzergerät zu benachrichtigen, dass die mehreren Träger für die Sidelink-Kommunikation zwischen dem Sendebenutzergerät und der Empfangsbenutzergerät konfiguriert wurden, wobei die zweiten Informationen Informationen umfassen, die einen aktivierten/deaktivierten Zustand jedes sekundären Trägers in den mehreren Trägern angeben.

11. Maschinenlesbares Medium, wobei das Medium Anweisungen speichert, und wenn die Anweisungen auf einem Übertragungsbenutzergerät ausgeführt werden, das Übertragungsbenutzergerät konfiguriert ist, um das Verfahren nach einem der Ansprüche 1 bis 10 auszuführen.

12. Übertragungsbenutzergerät, Übertragungs-UE, Tx UE, umfassend:
einen Prozessor; und
Speicher, wobei Anweisungen in dem Speicher gespeichert sind, und wenn die Anweisungen durch den Prozessor ausgeführt werden, das Übertragungsbenutzergerät konfiguriert ist, um das Verfahren nach einem der Ansprüche 1 bis 10 auszuführen.

## Revendications

1. Procédé de communication sans fil pour un équipement utilisateur de transmission, UE de transmission, Tx UE, comprenant :
la détermination (S301) d'informations de requête de configuration multiporteuse, pour demander à un dispositif réseau de configurer plusieurs porteuses pour une communication de liaison latérale entre l'équipement utilisateur de transmission et l'équipement utilisateur de réception, UE de réception, Rx UE ;
l'envoi (S301) des informations de requête de configuration multiporteuse au dispositif réseau ; et
la réception (S302), provenant du dispositif de réseau, de premières informations indiquant une configuration multiporteuse, dans lequel les premières informations comprennent des informations relatives à plusieurs porteuses configurées par le dispositif de réseau pour l'équipement utilisateur de transmission ; dans lequel les premières informations comprennent des informations selon lesquelles le dispositif de réseau indique, parmi les multiples porteuses, une porteuse à utiliser comme porteuse principale ;
dans lequel le procédé comprend également :
la détermination (S507) du fait de savoir si une connexion de liaison latérale utilisée pour la communication de liaison latérale peut être établie avec l'équipement utilisateur de réception sur la base de la porteuse principale ; et
lorsqu'il est déterminé que la connexion de liaison latérale ne peut pas être établie avec l'équipement utilisateur de réception sur la base de la porteuse principale dans un délai seuil après que des informations destinées à demander la connexion de liaison latérale ont été envoyées à l'équipement utilisateur de réception, l'envoi d'au moins l'une des informations suivantes au dispositif réseau : des informations sur un échec dans l'établissement de la connexion de liaison latérale et des informations destinées à demander au dispositif réseau d'indiquer de nouveau une porteuse principale.

2. Procédé de communication sans fil selon la revendication 1, dans lequel le procédé comprend également :
la sélection d'une porteuse parmi plusieurs porteuses comme porteuse principale.

3. Procédé de communication selon la revendication 2, dans lequel le procédé comprend également :
la détermination du fait de savoir si une connexion de liaison latérale utilisée pour la communication de liaison latérale peut être établie avec l'équipement utilisateur de réception sur la base de la porteuse principale ; et
lorsqu'il est déterminé que la connexion de liaison latérale ne peut pas être établie avec l'équipement utilisateur de réception sur la base de la porteuse principale, la sélection d'une autre porteuse parmi les plusieurs porteuses comme porteuse principale.

4. Procédé de communication sans fil selon l'une quelconque des revendications 1 à 3, dans lequel le procédé comprend également :
après avoir reçu les premières informations provenant du dispositif réseau, l'envoi, au dispositif réseau, d'informations destinées à demander une ressource requise pour l'établissement de la connexion de liaison latérale, dans lequel la ressource est liée à la porteuse principale.

5. Procédé de communication sans fil selon l'une quelconque des revendications 1 à 4, dans lequel le procédé comprend également :
avant d'envoyer les informations de requête de configuration multiporteuse au dispositif réseau, la réception, provenant de l'équipement utilisateur de réception, des informations indiquant que l'établissement de la connexion de liaison latérale est terminé.

6. Procédé de communication sans fil selon la revendication 5, dans lequel les informations de requête de configuration multiporteuse comprennent des informations indiquant une capacité de communication multiporteuse d'au moins l'un de l'équipement utilisateur de transmission et de l'équipement utilisateur de réception.

7. Procédé de communication sans fil selon la revendication 6, dans lequel les informations concernant la capacité de communication multiporteuse comprennent au moins l'une d'une quantité de plusieurs porteuses prises en charge et des bandes de fréquence des plusieurs porteuses prises en charge.

8. Procédé de communication sans fil selon l'une quelconque des revendications 1 à 7, dans lequel les premières informations comprennent des informations indiquant un état activé/désactivé de chaque porteuse ou de chaque porteuse secondaire dans les plusieurs porteuses.

9. Procédé de communication sans fil selon la revendication 8, dans lequel le procédé comprend également :
la réalisation, sur la base des premières informations, de la communication de liaison latérale sur au moins une porteuse ou au moins une porteuse secondaire qui fait partie des plusieurs porteuses et qui est indiquée comme étant dans un état activé.

10. Procédé de communication sans fil selon l'une quelconque des revendications 1 à 9, dans lequel le procédé comprend également :
l'envoi, à l'équipement utilisateur de réception, de secondes informations indiquant la configuration multiporteuse, pour notifier à l'équipement utilisateur de réception que les multiples porteuses ont été configurées pour la communication de liaison latérale entre l'équipement utilisateur de transmission et l'équipement utilisateur de réception, dans lequel les secondes informations comprennent des informations indiquant un état activé/désactivé de chaque porteuse secondaire parmi les plusieurs porteuses.

11. Support lisible par machine, dans lequel le support stocke des instructions, et lorsque les instructions sont exécutées sur un équipement utilisateur de transmission, l'équipement utilisateur de transmission est configuré pour effectuer le procédé selon l'une quelconque des revendications 1 à 10.

12. Équipement utilisateur de transmission, UE de transmission, Tx UE, comprenant :
un processeur ; et
une mémoire, dans lequel des instructions sont stockées dans la mémoire, et lorsque les instructions sont exécutées par le processeur, l'équipement utilisateur de transmission est configuré pour effectuer le procédé selon l'une quelconque des revendications 1 à 10.
